(19) Europäisches Patentamt
European Patent Office
Office européen des brevets

(11) **EP 2 242 337 A2**

(12) **EUROPEAN PATENT APPLICATION**

(43) Date of publication:
**20.10.2010 Bulletin 2010/42**

(51) Int Cl.:
***H05B 41/04*** (2006.01)

(21) Application number: **10001646.8**

(22) Date of filing: **18.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **23.02.2009 JP 2009039649**

(71) Applicant: **Panasonic Electric Works Co., Ltd.**
**Kadoma 571-8686**
**Osaka (JP)**

(72) Inventors:
• **Yamahara, Daisuke**
  **Osaka 575-0003 (JP)**
• **Komatu, Naoki**
  **Hyogo 657-0855 (JP)**

(74) Representative: **Rüger, Barthelt & Abel**
**Patentanwälte**
**Webergasse 3**
**73728 Esslingen (DE)**

(54) **Discharge lamp lighting device and illumination fixture and projector using the same**

(57) [Object] To realize necessary and sufficient electrode heating and thus forming stable discharge without complicating the circuit structure.

[Means for Settlement] A discharge lamp lighting device 1 includes a full bridge circuit 11 for converting received DC power into AC power, a starting circuit 12 for generating a starting high voltage to cause a dielectric breakdown in a lamp DL, a step-down chopper 13 for stepping down a voltage outputted from a DC power source E and outputting the voltage to the full bridge circuit 11, a lamp lighting state detection part 14 for detecting a lighting state of the lamp DL, and a control circuit 15 for controlling the full bridge circuit 11 and the starting circuit 13. The control circuit 15 sets the amount of power supplied to the lamp in an electrode heating period in starting the lamp in accordance with a cumulative lighting time detected by the lamp lighting state detection part 14.

## Fig. 1

EP 2 242 337 A2

**Description**

[Field of the Invention]

The present invention relates to a high pressure discharge lamp lighting device for lighting a high pressure discharge lamp, an illumination fixture using thereof, and an illumination system constructed by a plurality of illumination fixtures.

[Background Art]

Many high pressure discharge lamps with high luminance called HID (High-Intensity Discharge) have been used mainly for vehicles. Each of the high pressure discharge lamps needs to generate discharge in the lamp at the time of lighting and therefore requires a lighting device which includes a power conversion circuit for outputting AC power by receiving DC power and a control circuit for controlling the power conversion circuit.

There is proposed an example of a high pressure discharge lamp lighting device that has set therein phases including: an ignition period (hereinafter referred to as a "phase 1") for heightening a voltage in a power conversion circuit by a control circuit for application to a discharge lamp lighting device and causing a dielectric breakdown (breakdown) for generation of arc discharge; a transfer/warming-up period (hereinafter referred to as a "phase 2") for heightening the frequency of AC power in the power conversion circuit to supply power that is equal to or higher than rated power to the high pressure discharge lamp so as to increase a temperature in the electrodes in a short period of time; and a period (hereinafter referred to as a "phase 3") for carrying out normal operation by applying rated AC power from the power conversion circuit to the high pressure discharge lamp, wherein the lamp supply current in the phase 2 is optimized to heat the electrode in the high pressure discharge lamp to a sufficient degree in a short period of time (e.g. refer to Patent Document 1).

However, a result of an experiment described below shows that the above conventional example sufficiently heats electrodes of some specific high pressure discharge lamps, but might be insufficient in heating electrodes of electrodes of other high pressure discharge lamps.

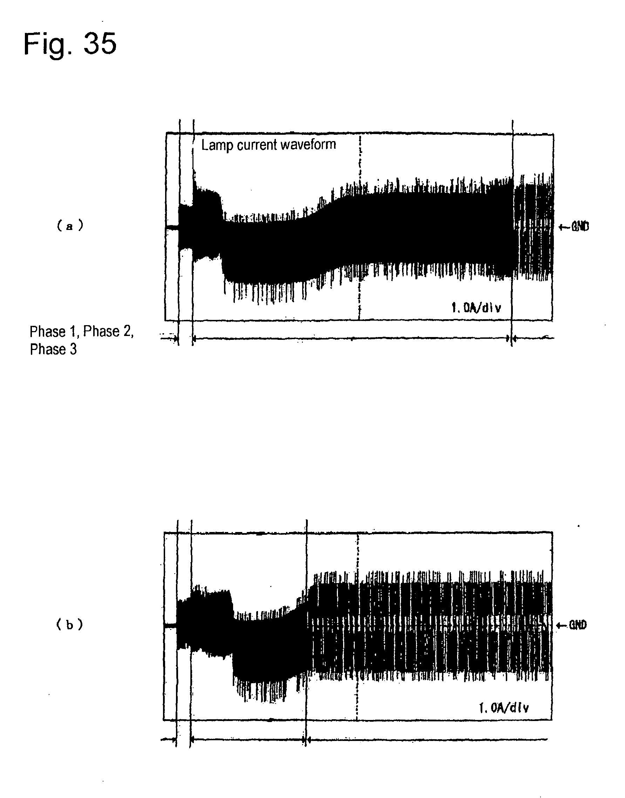

Fig. 35 shows a waveform of a lamp current obtained when duration of the phase 2 is varied in an experiment carried out by using a high pressure discharge lamp lighting device structured as stated above to light a high pressure discharge lamp (HCI-TC/E70W/NDL: manufactured by OSRAM).

As shown in Fig. 35a, where the duration of the phase 2 is sufficiently long, the lamp current gradually flows to both electrodes substantially uniformly, which provides for transition to the phase 3 after formation of stable discharge.

In contrast, as shown in Fig. 35b, where the duration of the phase 2 is short, the waveform of the lamp current is not uniform with respect to the electrodes, resulting in a half-wave discharge state. Thus, the electrodes cannot be heated sufficiently, and transition to the phase 3 in this state makes the discharge extremely unstable, resulting in a possibility of die-out of the lighting.

In general, high pressure discharge lamps at the end of their service life are difficult to start in comparison with unused high pressure discharge lamps and easily suffer die-out, flickering, and the like after transition to the phase 3. This is mainly because high pressure discharge lamps at the end of their service life insufficiently heat the electrodes electrode in the phase 2 and proceed to the phase 3 in a half-wave discharge state.

Defective starting is also caused by contaminating impurities that occur in the manufacture process of high pressure discharge lamps. For example, if an impurity $H_2O$ enters a lamp in the manufacture process, the impurity $H_2O$ forms an oxide with an inclusion (a metal) of the lamp, resulting in hydrogen and iodine as shown in the following chemical equations 1 to 3, and these electron attachment materials capture electrons.

[Chemical equation 1]

$$3H_2O + 2Tm(Ho, Dy)I_3 \Rightarrow 3H_2 + Tm_2(Ho, Dy)O_3 + 3I_2 \tag{1}$$

[Chemical equation2]

$$I_2 + 2e^- \Rightarrow 2I^- \tag{2}$$

[Chemical equation3]

$$HI + e^- \Rightarrow (HI)^* \Rightarrow H + I^\cdot \qquad (3)$$

Electron attachment materials incorporating electrons easily cause unstable discharge because they hinder discharge and thus degrade startability, thereby increasing a discharge maintaining voltage. Moreover, the amount of contaminating impurity in the manufacture process varies on a high pressure discharge lamp basis, which means that the startabilities of high pressure discharge lamps are different individually.

In order to resolve these problems, the duration of the phase 2 may be set longer or the value of the lamp current in the phase 2 may be set larger, thereby ensuring sufficient electrode heating for any high pressure discharge lamp.

However, if these solutions are applied uniformly to all high pressure discharge lamps, excessive electrode heating occurs in the cases of high pressure discharge lamps in an early stage of use and high pressure discharge lamps with small amounts of contaminating impurities, posing a possibility of defects such as shortened life for high pressure discharge lamps.

Another possible method includes: detecting a current and/or voltage supplied to a high pressure discharge lamp in the phase 2; and upon determining that the detected current and/or voltage is not substantially uniform in the positive and negative polarities, heating both electrodes uniformly by changing the current supplied to the high pressure discharge lamp. According to this method, a substantially uniform lamp current flows in an early stage of the phase 2 and stable discharge is formed at the time of transition to the phase 3.

However, realizing the above method requires a detection circuit and a control circuit of complicated structure, resulting in increased costs due to an increase in the number of parts.

[Conventional Technique Document]

[Patent Document]

[Patent Document 1] Japanese Translation of PCT No. 2005-507553

[Disclosure of the Invention]

[Problems to be solved by the Invention]

The present invention was achieved in view of the above-described circumstances, and it is an object of the present invention to provide a high pressure discharge lamp lighting device, an illumination fixture, and an illumination system that are capable of carrying out necessary and sufficient electrode heating and thus forming stable discharge without complicating the circuit structure.

[Means adapted to solve the Problems]

A high pressure discharge lamp lighting device according to the present invention includes: a power conversion circuit for converting DC power into AC power; a starting circuit for generating a high voltage to start a high pressure discharge lamp; and a control circuit for controlling the power conversion circuit and the starting circuit, the high pressure discharge lamp lighting device having: an electrode heating period for heating electrodes of the high pressure discharge lamp after a dielectric breakdown of the high pressure discharge lamp; and a stable period for maintaining stable discharge of the high pressure discharge lamp by supplying an AC current thereto. The high pressure discharge lamp lighting device includes a lamp lighting state detection part for detecting a lighting state of the high pressure discharge lamp. The control circuit sets an amount of power supplied to the high pressure discharge lamp in the electrode heating period in accordance with information on the lighting state of the high pressure discharge lamp detected by the lamp lighting state detection part.

This configuration enables necessary and sufficient electrode heating regardless of whether the period of use of the high pressure discharge lamp is long or short, and thus prevents die-out and flickering of the lighting in the stable period, thereby making it possible to form stable discharge. These features can also be realized without requiring a complicated circuit structure.

In the high pressure discharge lamp lighting device of the present invention, the above lighting state information may be a cumulative lighting time of the high pressure discharge lamp.

This configuration eliminates excessive stress to a new high pressure discharge lamp and enables sufficient electrode heating for a high pressure discharge lamp of long cumulative lighting time, which easily suffers unstable discharge. Both high pressure discharge lamps form stable discharge at the time of transition to the stable period, thereby making it possible to prevent die-out and flickering of the lighting.

In the high pressure discharge lamp lighting device of the present invention, the lighting state information may be an electrical characteristic of the high pressure discharge lamp.

This configuration enables, by setting the amount of power supplied to the high pressure discharge lamp in accordance with the detected electrical characteristic of the high pressure discharge lamp, necessary and sufficient electrode heating regardless of whether the period of use of the high pressure discharge lamp is long or short, and thus prevents die-out and flickering of the lighting in the stable period, thereby making it possible to form stable discharge.

In the high pressure discharge lamp lighting device of the present invention, the lighting state information may include a cumulative lighting time and an electrical characteristic of the high pressure discharge lamp.

This configuration enables, by setting the amount of power supplied to the high pressure discharge lamp in accordance with the detected cumulative lighting time and electrical characteristic of the high pressure discharge lamp, optimum electrode heating regardless of whether the period of use of the high pressure discharge lamp is long or short, and thus prevents extreme adverse effects to the lamp life due to excessive heating, thereby making it possible to form stable discharge.

In the high pressure discharge lamp lighting device of the present invention, the electrical characteristic may be a value of change between an electrical characteristic at the time of mounting the high pressure discharge lamp and a previous electrical characteristic.

This configuration enables, by setting the amount of power supplied to the high pressure discharge lamp in accordance with the value of change between an electrical characteristic at the time of mounting the high pressure discharge lamp and a previous electrical characteristic, optimum electrode heating in the phase 2 regardless of the individual difference of the high pressure discharge lamp such as the amount of impurity contaminating the lamp, and thus prevents die-out and flickering of the lighting in the stable period, thereby making it possible to form stable discharge.

In the high pressure discharge lamp lighting device of the present invention, the electrical characteristic may be observed between a predetermined cumulative lighting time from mounting of the high pressure discharge lamp.

This configuration enables, by setting the amount of power supplied to the high pressure discharge lamp in accordance with electrical characteristic observed between a predetermined cumulative lighting time from mounting of the high pressure discharge lamp, optimum electrode heating in the phase 2 regardless of the individual difference of the high pressure discharge lamp such as the amount of impurity contaminating the lamp, and thus prevents die-out and flickering of the lighting in the stable period, thereby making it possible to form stable discharge.

In the high pressure discharge lamp lighting device of the present invention, the electrical characteristic may be observed between a dielectric breakdown of the high pressure discharge lamp and transition to the stable period.

This configuration enables, by setting the amount of power supplied to the high pressure discharge lamp in accordance with the electrical characteristics observed between a dielectric breakdown of the high pressure discharge lamp and transition to the stable period, optimum electrode heating in the phase 2 regardless of the individual difference of the high pressure discharge lamp such as the amount of impurity contaminating the lamp, and thus prevents die-out and flickering of the lighting in the stable period, thereby making it possible to form stable discharge.

In the high pressure discharge lamp lighting device of the present invention, the electrical characteristic may be a minimum lamp voltage.

This configuration enables, by setting the amount of power supplied to the high pressure discharge lamp in accordance with the minimum lamp voltage of the high pressure discharge lamp, optimum electrode heating in the phase 2 regardless of the individual difference of the high pressure discharge lamp such as the amount of impurity contaminating the lamp, and thus prevents die-out and flickering of the lighting in the stable period, thereby making it possible to form stable discharge.

In the high pressure discharge lamp lighting device of the present invention, the electrical characteristic may be an effective value of a lamp voltage in the stable period.

This configuration enables, by setting the amount of power supplied to the high pressure discharge lamp in accordance with the effective value of a lamp voltage in the stable period of the high pressure discharge lamp, optimum electrode heating regardless of the individual difference or cumulative lighting time of the high pressure discharge lamp, and thus prevents die-out and flickering of the lighting in the stable period, thereby making it possible to form stable discharge.

In the high pressure discharge lamp lighting device of the present invention, the electrical characteristic may be a re-ignition voltage in the stable period.

This configuration enables, by setting the amount of power supplied to the high pressure discharge lamp in accordance with the re-ignition voltage in the stable period of the high pressure discharge lamp, optimum electrode heating regardless of the individual difference or cumulative lighting time of the high pressure discharge lamp, and thus prevents die-out and flickering of the lighting in the stable period, thereby making it possible to form stable discharge.

In the high pressure discharge lamp lighting device of the present invention, the amount of supplied power may be a value of a current supplied to the high pressure discharge lamp.

This configuration enables, by setting the value of a current supplied to the high pressure discharge lamp as the amount of power supplied thereto, necessary and sufficient electrode heating regardless of whether the period of use of the high pressure discharge lamp is long or short, and thus prevents die-out and flickering of the lighting in the stable period, thereby making it possible to form stable discharge.

In the high pressure discharge lamp lighting device of the present invention, the amount of supplied power may be duration of the electrode heating period.

This configuration enables, by setting duration of the electrode heating period as the amount of power supplied to the high pressure discharge lamp, necessary and sufficient electrode heating regardless of whether the period of use of the high pressure discharge lamp is long or short, and thus prevents die-out and flickering of the lighting in the stable period, thereby making it possible to form stable discharge.

In the high pressure discharge lamp lighting device of the present invention, the value of the supplied current to the high pressure discharge lamp and the duration of the electrode heating period may increase from an initially established value.

This configuration, where the value of a current supplied to the high pressure discharge lamp and duration of the electrode heating period that are established as the amount of power supplied to the high pressure discharge lamp increases from an initially established value, enables necessary and sufficient electrode heating regardless of the individual difference of the high pressure discharge lamp such as the amount of impurity contaminating the lamp, and thus prevents die-out and flickering of the lighting in the stable period, thereby making it possible to form stable discharge.

In the high pressure discharge lamp lighting device of the present invention, an upper limit may be set to a product of the value of a current supplied to the high pressure discharge lamp and duration of the electrode heating period.

This configuration enables, by setting an upper limit to a product of the value of a current supplied to the high pressure discharge lamp and duration of the electrode heating period, which are established as the amount of power supplied to the high pressure discharge lamp, necessary and sufficient electrode heating regardless of whether the period of use of the high pressure discharge lamp is long or short, and thus prevents die-out and flickering of the lighting in the stable period, thereby making it possible to form stable discharge.

In the high pressure discharge lamp lighting device of the present invention, the cumulative lighting time, the electrical characteristic observed between a predetermined cumulative lighting time from mounting of the high pressure discharge lamp, and the value of change are initialized when the high pressure discharge lamp is replaced.

This configuration, where the cumulative lighting time, the electrical characteristic observed between a predetermined cumulative lighting time from mounting of the high pressure discharge lamp, and the value of change, which are established as the amount of power supplied to the high pressure discharge lamp, are initialized when the high pressure discharge lamp is replaced, enables necessary and sufficient electrode heating regardless of whether the period of use of the high pressure discharge lamp is long or short, and thus prevents die-out and flickering of the lighting in the stable period, thereby making it possible to form stable discharge.

An illumination fixture according to the present invention includes: the high pressure discharge lamp lighting device; a socket electrically connected to the discharge lamp lighting device and used to connect the high pressure discharge lamp electrically and mechanically; and a fixture main body for holding the high pressure discharge lamp lighting device and the socket.

This configuration provides for an illumination fixture without die-out and flickering of the lighting regardless of whether the period of use of the high pressure discharge lamp is long or short.

An illumination system according to the present invention includes: a plurality of the illumination fixtures; and a control device for controlling each of the plurality of the illumination fixtures.

This configuration provides for an illumination system without die-out and flickering of the lighting regardless of whether the period of use of the high pressure discharge lamp is long or short.

[Effect of the Invention]

The present invention provides a high pressure discharge lamp lighting device, an illumination fixture, and an illumination system that are capable of carrying out necessary and sufficient electrode heating and thus forming stable discharge without complicating the circuit structure.

[Brief Description of the Drawings]

[Fig.1] Fig. 1 shows a schematic configuration of a high pressure discharge lamp lighting device according to a first embodiment of the present invention.

[Fig.2] Fig. 2 shows a driving signal applied to each gate of switching elements in the high pressure discharge lamp lighting device according to the first embodiment of the present invention.

[Fig. 3] Fig. 3 shows waveforms of a lamp voltage and a lamp current applied to a high pressure discharge lamp in the high pressure discharge lamp lighting device according to the first embodiment of the present invention.

[Fig. 4] Fig. 4 is a flowchart to describe an operational procedure of a starting sequence in the high pressure discharge lamp lighting device according to the first embodiment of the present invention.

[Fig. 5] Fig. 5a is a diagram to describe setting the duration of a phase 2 to increase linearly in accordance with the cumulative lighting time of a high pressure discharge lamp in the high pressure discharge lamp lighting device according to the first embodiment of the present invention, and Fig. 5b is diagram to describe setting the duration of the phase 2 to increase in a fixed curve form in accordance with cumulative lighting time of the high pressure discharge lamp in the high pressure discharge lamp lighting device according to the first embodiment of the present invention.

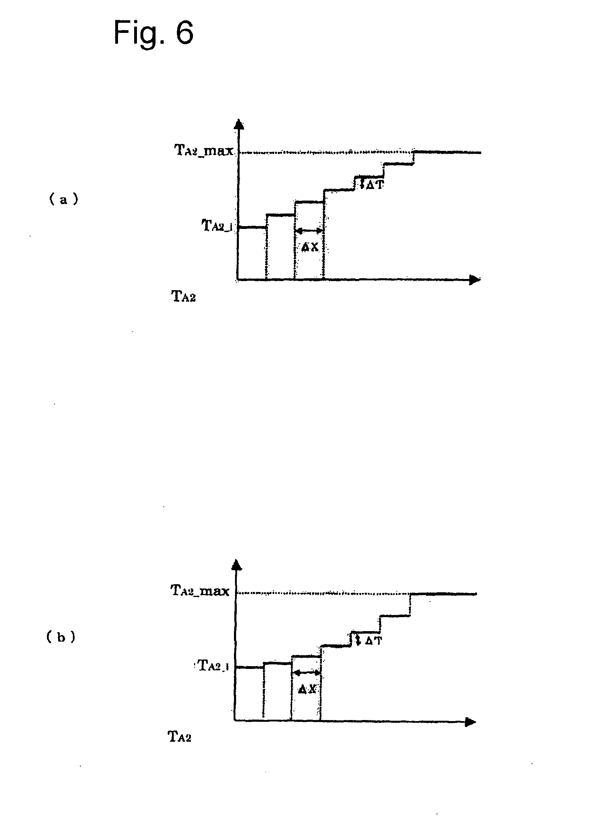

[Fig. 6] Fig. 6a is a diagram to describe setting the duration of the phase 2 to increase on a fixed time basis in accordance with the cumulative lighting time of the high pressure discharge lamp in the high pressure discharge lamp lighting device according to the first embodiment of the present invention, and Fig. 6b is a diagram to describe setting the duration of the phase 2 to increase on a varied time basis in accordance with the cumulative lighting time of the high pressure discharge lamp in the high pressure discharge lamp lighting device according to the first embodiment of the present invention.

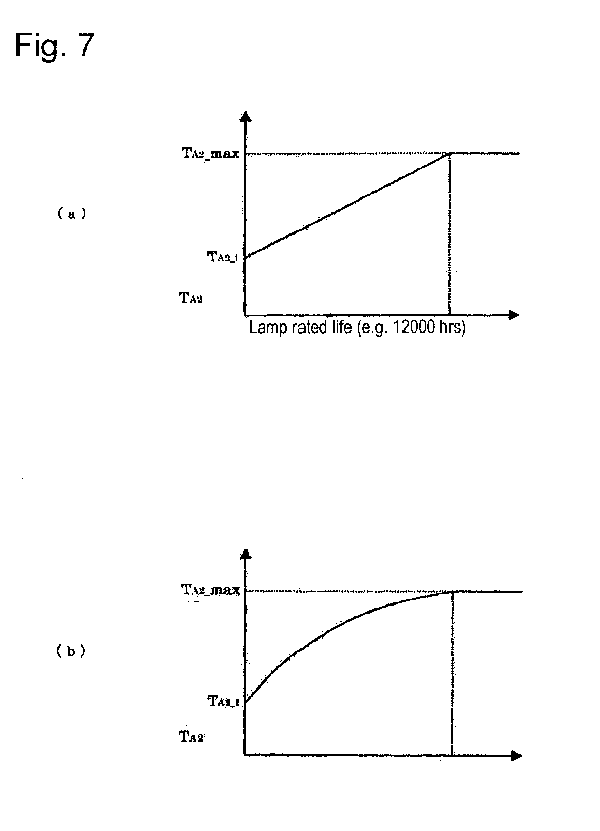

[Fig. 7] Fig. 7a is a diagram to describe providing an upper limit in the case of setting the duration of the phase 2 to increase linearly in accordance with the cumulative lighting time of the high pressure discharge lamp in the high pressure discharge lamp lighting device according to the first embodiment of the present invention, and Fig. 7b is a diagram to describe providing an upper limit in the case of setting the duration of the phase 2 to increase in a fixed curve form in accordance with the cumulative lighting time of the high pressure discharge lamp in the high pressure discharge lamp lighting device according to the first embodiment of the present invention.

[Fig. 8] Fig. 8a shows a waveform of a lamp current in the case of lighting an unused high pressure discharge lamp in the high pressure discharge lamp lighting device according to the first embodiment of the present invention, and Fig. 8b shows a waveform of a lamp current in the case of lighting a high pressure discharge lamp at the end of its service life in the high pressure discharge lamp lighting device according to the first embodiment of the present invention.

[Fig. 9] Fig. 9 shows a schematic configuration of a modified example of the high pressure discharge lamp lighting device according to the first embodiment of the present invention.

[Fig. 10] Fig. 10 shows a driving signal applied to each gate of the switching elements in the modified example of the high pressure discharge lamp lighting device according to the first embodiment of the present invention.

[Fig. 11] Fig. 11 shows a schematic configuration of another modified example of the high pressure discharge lamp lighting device according to the first embodiment of the present invention.

[Fig. 12] Fig. 12 shows a driving signal applied to each gate of the switching elements in the other modified example of the high pressure discharge lamp lighting device according to the first embodiment of the present invention.

[Fig. 13] Fig. 13 is a flowchart to describe an operational procedure of a starting sequence in a high pressure discharge lamp lighting device according to a second embodiment of the present invention.

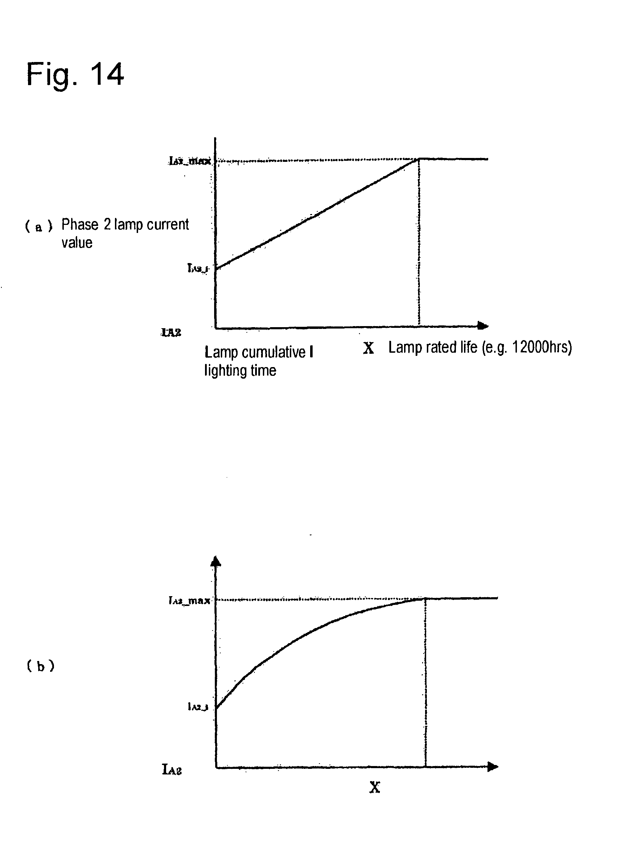

[Fig. 14] Fig. 14a is diagram to describe setting the current value of a high pressure discharge lamp in the phase 2 to increase linearly in accordance with the cumulative lighting time of the high pressure discharge lamp in the high pressure discharge lamp lighting device according to the second embodiment of the present invention, and Fig. 14b is a diagram to describe setting the current value of the high pressure discharge lamp in the phase 2 to increase in a fixed curve form in accordance with the cumulative lighting time of the high pressure discharge lamp in the high pressure discharge lamp lighting device according to the second embodiment of the present invention.

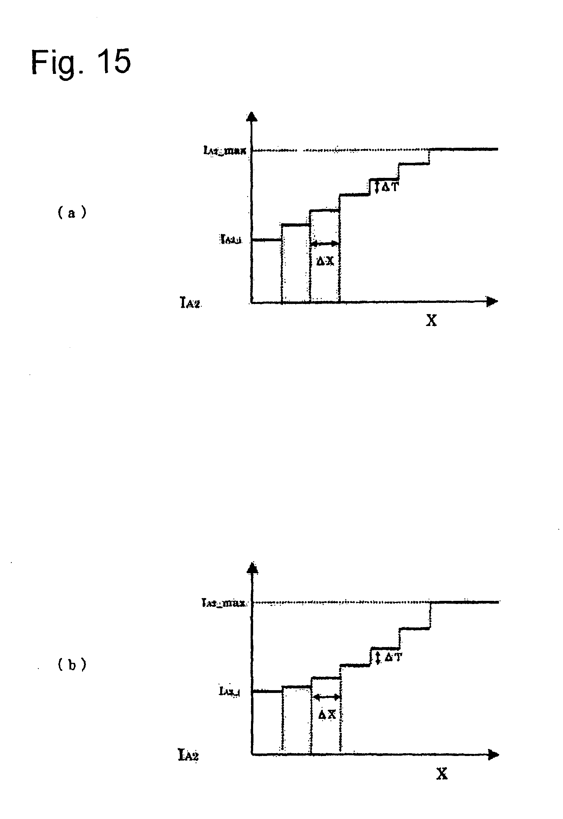

[Fig. 15] Fig. 15a is a diagram to describe setting the current value of the high pressure discharge lamp in the phase 2 to increase on a fixed time basis in accordance with the cumulative lighting time of the high pressure discharge lamp in the high pressure discharge lamp lighting device according to the second embodiment of the present invention, and Fig. 15b is a diagram to describe setting the current value of the high pressure discharge lamp in the phase 2 to increase on a varied time basis in accordance with the cumulative lighting time of the high pressure discharge lamp in the high pressure discharge lamp lighting device according to the second embodiment of the present invention.

[Fig. 16] Fig. 16a is a diagram to describe setting the current value of the high pressure discharge lamp in the phase 2 to be constant in accordance with a lamp voltage by using the cumulative lighting time of the high pressure discharge lamp as a parameter in the high pressure discharge lamp lighting device according to the second embodiment of the present invention, and Fig. 16b is a diagram to describe setting the current value of the high pressure discharge lamp in the phase 2 in accordance with a lamp voltage of a VI curve by using the cumulative lighting time of the high pressure discharge lamp as a parameter in the high pressure discharge lamp lighting device according to the second embodiment of the present invention.

[Fig. 17] Fig. 17a shows a waveform of a lamp current in the case of lighting an unused high pressure discharge lamp in the high pressure discharge lamp lighting device according to the second embodiment of the present invention, and Fig. 17b shows a waveform of a lamp current in the case of lighting a high pressure discharge lamp at the end of its service life in the high pressure discharge lamp lighting device according to the second embodiment of the present invention.

[Fig. 18] Fig. 18 is a flowchart to describe an operational procedure of a starting sequence in a high pressure discharge lamp lighting device according to a third embodiment of the present invention.

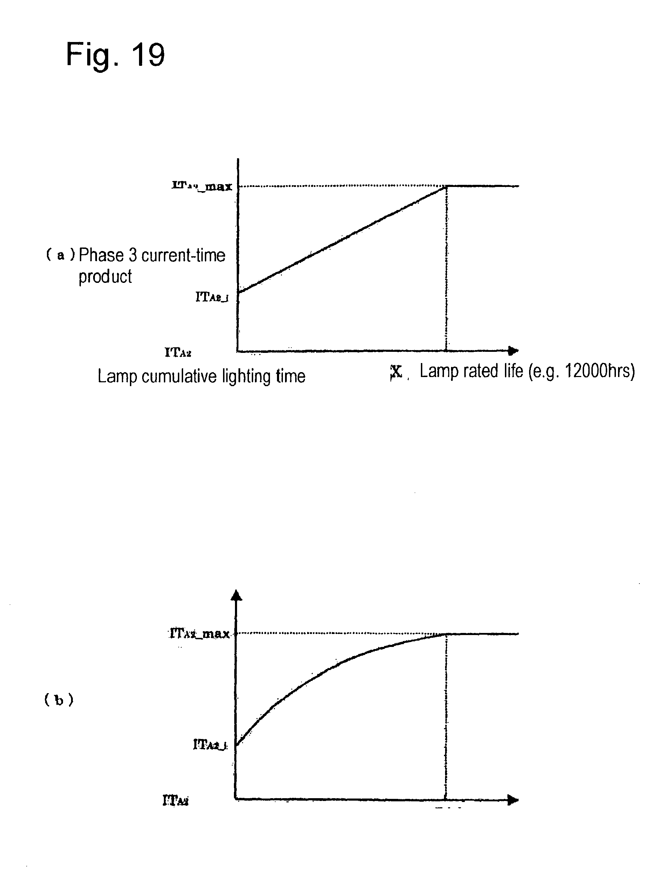

[Fig. 19] Fig. 19a is a diagram to describe setting a current-time product in the phase 2 to increase linearly in accordance with the cumulative lighting time of the high pressure discharge lamp in the high pressure discharge lamp lighting device according to the third embodiment of the present invention, and Fig. 19b is a diagram to describe setting the current-time product in the phase 2 to increase in a curve form in accordance with the cumulative lighting time of the high pressure discharge lamp in the high pressure discharge lamp lighting device according to the third embodiment of the present invention.

[Fig. 20] Fig. 20 is a flowchart to describe an operational procedure of a starting sequence in a high pressure discharge lamp lighting device according to a fourth embodiment of the present invention.

[Fig. 21] Fig. 21 is a flowchart to describe an operational procedure of a starting sequence in a high pressure discharge lamp lighting device according to a fifth embodiment of the present invention.

[Fig. 22] Fig. 22 exemplifies a waveform of a lamp voltage in a phase 3 in the high pressure discharge lamp lighting device according to the fifth embodiment of the present invention.

[Fig. 23] Fig. 23 exemplifies a circuit to detect a re-ignition voltage Vp of a lamp voltage in the high pressure discharge lamp lighting device according to the fifth embodiment of the present invention.

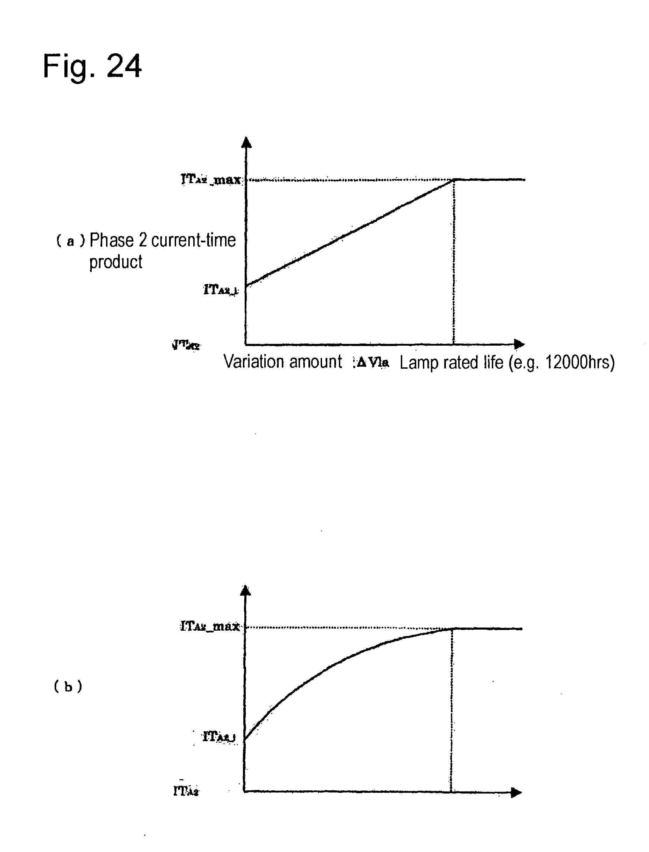

[Fig. 24] Fig. 24a is a diagram to describe setting a current-time product in the phase 2 to increase linearly in accordance with a difference in the lamp voltage effective value of the high pressure discharge lamp in the high pressure discharge lamp lighting device according to the fifth embodiment of the present invention, and Fig. 24b is a diagram to describe setting the current-time product in the phase 2 to increase in a curve form in accordance with the difference in the lamp voltage effective value of the high pressure discharge lamp in the high pressure discharge lamp lighting device according to the fifth embodiment of the present invention.

[Fig. 25] Fig. 25 is a flowchart to describe an operational procedure of a starting sequence in a high pressure discharge lamp lighting device according to a sixth embodiment of the present invention.

[Fig. 26] Fig. 26 shows a lamp voltage at the time of starting in the high pressure discharge lamp lighting device according to the sixth embodiment of the present invention.

[Fig. 27] Fig. 27a is a diagram to describe setting a current-time product in the phase 2 to increase linearly in accordance with the lamp voltage of the high pressure discharge lamp in the high pressure discharge lamp lighting device according to the sixth embodiment of the present invention, and Fig. 27b is a diagram to describe setting the current-time product in the phase 2 to increase in a curve form in accordance with the lamp voltage of the high pressure discharge lamp in the high pressure discharge lamp lighting device according to the sixth embodiment of the present invention.

[Fig. 28] Fig. 28 is a flowchart to describe another operational procedure of the starting sequence in the high pressure discharge lamp lighting device according to the sixth embodiment of the present invention.

[Fig. 29] Fig. 29 shows a schematic configuration of a high pressure discharge lamp lighting device according to a seventh embodiment of the present invention.

[Fig. 30] Fig. 30 shows changes in lamp voltage relative to the cumulative lighting time in the high pressure discharge lamp lighting device according to the seventh embodiment of the present invention.

[Fig. 31] Fig. 31 is a flowchart to describe an operational procedure of a starting sequence in the high pressure discharge lamp lighting device according to the seventh embodiment of the present invention.

[Fig. 32] Fig. 32 shows changes in cumulative lighting time relative to the lamp voltage in a high pressure discharge lamp lighting device according to an eighth embodiment of the present invention.

[Fig. 33] Fig. 33a shows changes in lamp voltage relative to the cumulative lighting time in the high pressure discharge lamp lighting device according to the eighth embodiment of the present invention, and Fig. 33b shows changes in current-time product relative to the cumulative lighting time in the high pressure discharge lamp lighting device according to the eighth embodiment of the present invention.

[Fig. 34] Fig. 34a is a perspective view showing an example of an illumination fixture according to the eighth embodiment of the present invention, Fig. 34b is a perspective view showing another example of the illumination fixture according to the eighth embodiment of the present invention, and Fig. 34c is a perspective view showing yet another example of the illumination fixture according to the eighth embodiment of the present invention.

[Fig. 35] Fig. 35a shows a waveform of a lamp current in the case of a sufficiently long duration of the phase 2 in a conventional discharge lamp lighting device, and Fig. 35b shows a waveform of a lamp current in the case of a short duration of the phase 2 in the conventional discharge lamp lighting device.

[Best Mode for Carrying Out the Invention]

Description will be made below, by reference to the drawings, of high pressure discharge lamp lighting devices, illumination fixtures, and illumination systems according to embodiments of the present invention. The high pressure discharge lamp lighting devices according to the embodiments of the present invention is for lighting high pressure discharge lamps such as HID lamps.

(First embodiment)

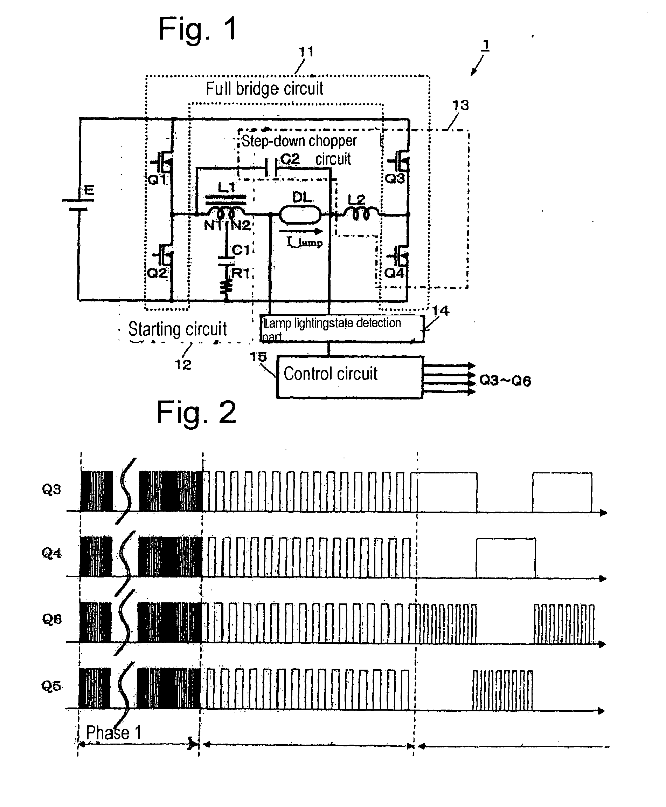

Fig. 1 shows a schematic configuration of a high pressure discharge lamp lighting device according to a first embodiment of the present invention.

In Fig. 1, a high pressure discharge lamp lighting device 1 according to the present embodiment is for lighting a lamp DL which is a high pressure discharge lamp such as HID, and includes, as a power conversion circuit to convert DC power inputted from a DC power source E into AC power, a full bridge circuit 11 composed of four switching elements Q1 to Q4. In the present embodiment, field effect transistors (FETs) are used for the switching elements Q1 to Q4.

Each of the serially connected switching elements Q1, Q2 and Q3, Q4 of the full bridge circuit 11 is connected in parallel with the DC power source E, and a node of the switching elements Q1 and Q2 is connected to one of electrodes of the lamp DL via a first inductor L1 and a node of the switching elements Q3 and Q4 is connected to the other electrode of the lamp DL via a second inductor L2.

The first inductor L1 has an autotransformer structure having a tap, and the tap is connected to a ground side of the DC power source E via a series circuit made of a first capacitor C1 and a resistor R1 and constitutes, with the switching elements Q1 and Q2, a starting circuit 12 for generating a high voltage to cause a dielectric breakdown of the lamp DL. While the starting circuit 12 is of the system that generates a high voltage using a resonance voltage, some other system capable of generating a high voltage in a pulse manner is also possible such as a system using a piezoelectric element.

A node of the first inductor L1 and the switching elements Q1 and Q2 is connected to a second capacitor C2 that constitutes, with the switching elements Q3 and Q4 and the second inductor L2, a step-down chopper 13 for stepping down a voltage outputted from the DC power source E and outputting the voltage to the full bridge circuit 11.

The high pressure discharge lamp lighting device 1 according to the present embodiment further includes: a lamp lighting state detection part 14 for detecting a lighting state of the lamp DL and storing a detection result; and a control circuit 15 for carrying out on/off control of the switching elements Q1 to Q4.

The lamp lighting state detection part 14 includes a nonvolatile memory, not shown, and counts the lighting time of the lamp DL and stores a cumulative lighting time obtained by integrating the counted periods of time.

The control circuit 15 is composed of, for example, a microcomputer and carries out on/off driving of the switching elements Q1 to Q4 in such a manner that mutually diagonal switching elements of the switching elements Q1 to Q4 are simultaneously turned on while switching elements connected in series are alternately turned on or off. This causes DC power inputted from the DC power source E to be converted into AC power that has a frequency of inversed polarity obtained by the on/off driving of the switching elements Q1 to Q4 (this frequency being hereinafter referred to as an "operational frequency").

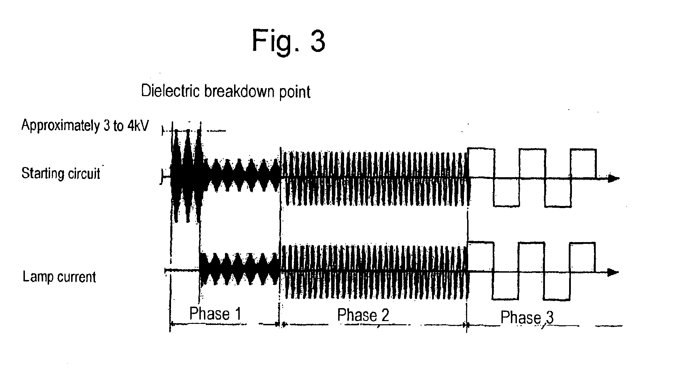

Next, description will be made of the operation of the high pressure discharge lamp lighting device 1 configured in the above-described manner. First, a schematic operation will be described by using the drawings shown in Fig. 2 and Fig. 3. Fig. 2 shows driving signals applied to the gates of the switching elements Q1 to Q4, and Fig. 3 shows waveforms of a lamp voltage and a lamp current actually applied to the lamp DL.

In Fig. 2, each of the switching elements Q1 to Q4 is on during a period of time when the driving signal is an H level and off during a period of time when the driving signal is an L level. Note that the periods of the H and L levels are set to be equal.

When the power source is turned on, the control circuit 15 starts a starting sequence for the lamp DL to reach a stable lighting state. Simultaneously, the lamp lighting state detection part 14 starts to count time.

The starting sequence is divided into a period during which a high voltage of a high frequency required for dielectric breakdown is applied to the lamp DL (hereinafter referred to as a "phase 1"), a period during which the electrodes are sufficiently heated after the dielectric breakdown of the lamp DL (hereinafter referred to as a "phase 2"), and a period of normal operation during which the lamp DL is made to light stably by causing a low-frequency rectangular wave current to flow through the lamp DL (hereinafter referred to as a "phase 3"). An operation in each of the phases will be described in detail below.

In the phase 1, the control circuit 15 changes the operational frequency periodically within the range of several tens kHz to several hundreds kHz and applies the operational frequency to the switching elements Q1 to Q2. This renders the operational frequency a resonance frequency (or an integer fraction thereof) of a resonance circuit composed of a primary winding N1 side of the first inductor L1 and the first capacitor C1, and a resonance voltage occurring at this time is boosted at the first inductor L1 of autotransformer structure at a winding ratio of N1:N2, whereby a voltage applied to the lamp DL (hereinafter referred to as a "lamp voltage") reaches a voltage required to start discharge, e.g. 3 to 4kV, and thus the lamp DL starts.

Fig. 3 shows that a dielectric breakdown occurs in a third cycle of periodical change of the operational frequency, which starts the lamp DL and allows the lamp current to flow, and that the amplitude of the lamp voltage is diminished by a change of impedance due to the start of the lamp DL.

The above operation continues for a predetermined period of time and then the phase 1 ends, followed by transition to the phase 2, which is a period of time during which the electrodes of the lamp DL is heated with the operational frequency made still lower, e.g. several tens kHz.

The operational frequency in the phase 2 is a frequency closer to a resonance frequency of a load circuit connected between output terminals of the full bridge circuit 11, compared with an operational frequency in the phase 3, described later, and each electrode of the lamp DL is heated with such operational frequency. Note that the operational frequency and the lamp current each may be an extremely low frequency.

The operation in the phase 2 continues for a predetermined period of time determined in accordance with the cumulative lighting time of the lamp DL as will be described later, and subsequently the operation in the phase 3 starts.

In the phase 3, the control circuit 15 makes the operational frequency still lower, e.g. several hundreds Hz, than that in the operation in the phase 2, and thus supplies the lamp DL with rectangular wave AC power to maintain lighting of the lamp DL. In the phase 3, the control circuit 15 carries out PWM control for adjustment of power supply to the lamp DL by turning on/off the switching elements Q3 and Q4 of one series circuit at a predetermined duty ratio, instead of turning them on constantly over the period during which the switching elements Q1 and Q2, which are respectively diagonal to the switching elements Q3 and Q4, are turned on.

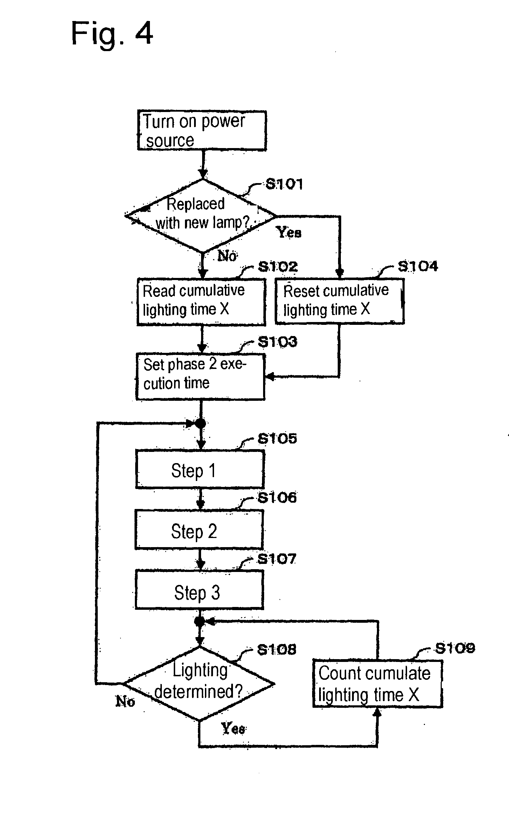

Here, an operation of the lamp lighting state detection part 14 will be described by referring to Fig. 4 to Fig. 8.

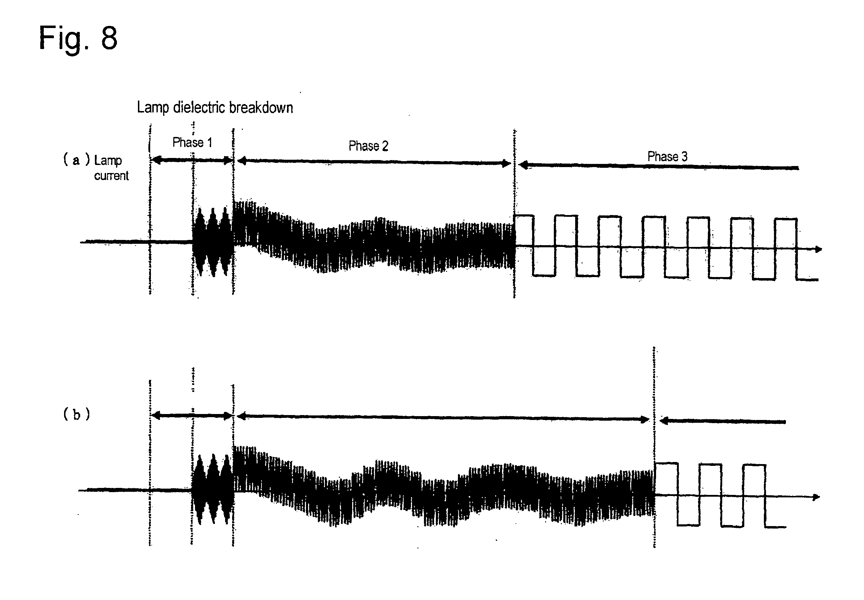

Since the phase 2 of the above-described starting sequence of the high pressure discharge lamp lighting device is immediately after the dielectric breakdown of the lamp DL, the electrodes are not heated sufficiently. This causes a half-wave discharge as shown in Fig. 8, where the lamp current is asymmetrical between the positive/negative polarities. If this half-wave discharge continues, die-out and flickering of the lighting may occur after transition to the phase 3, resulting in unstable lighting. This is in many cases observed in high pressure discharge lamps at the end of their service life, with long cumulative lighting time.

The lamp lighting state detection part 14, which is provided to solve this problem, detects a lighting time as an indicator of the lighting state of the lamp DL and stores a cumulative lighting time X obtained by integrating detected lighting periods of time in a nonvolatile memory, not shown. Note that the function to store the cumulative lighting time X can be substituted by a memory which is usually provided in a microcomputer of the control circuit 15. It is also possible to provide an external storage device attached to the high pressure discharge lamp lighting device 1 so as to store the cumulative lighting time X.

The lamp lighting state detection part 14 also has a function to reset the cumulative lighting time X to an initial value when the high pressure discharge lamp DL is replaced with a new one. Fig. 4 is a flowchart to describe an operational procedure of the starting sequence in the case where the lamp lighting state detection part 14 has a function to reset the cumulative lighting time X to an initial value.

After the power source is turned on, it is determined in step S101 whether the high pressure discharge lamp DL is replaced with a new one. If the determination result shows that the high pressure discharge lamp DL is not replaced with a new one, the cumulative lighting time X stored in the lamp lighting state detection part 14 is read (step S102).

Next, the control part 15 sets the duration of the phase 2 in accordance with the cumulative lighting time X that was read (step S103).

In contrast, if it is determined in the procedure of step S101 that the high pressure discharge lamp DL is replaced with a new one, the cumulative lighting time X stored in the lamp lighting state detection part 14 is reset in step S104, and the process proceeds to the procedure of step S103.

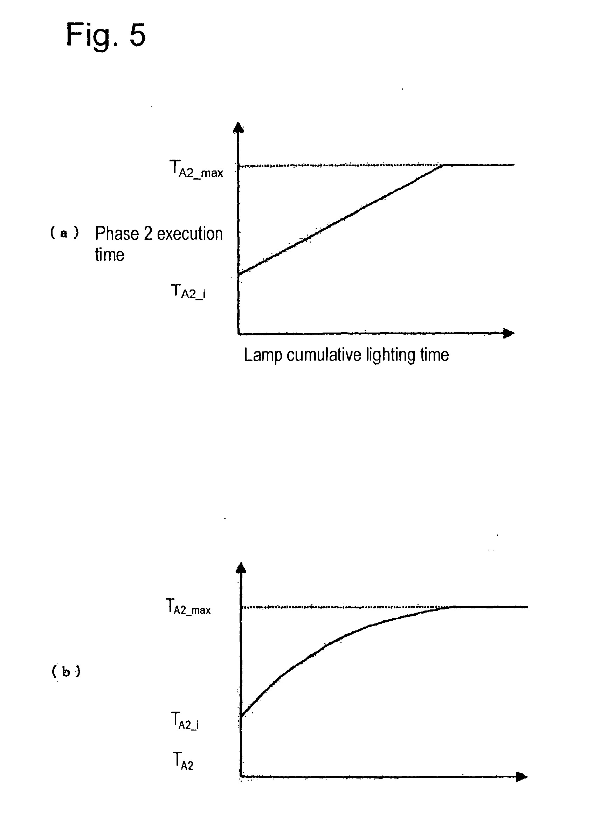

The duration of the phase 2 is changed in accordance with the cumulative lighting time of the lamp. Fig. 5 exemplifies cases to the increase duration TA2 of the phase 2 in accordance with the cumulative lighting time X, wherein Fig. 5a shows a linear increase and Fig. 5b shows a curved increase.

Fig. 6 also exemplifies cases to increase the duration TA2 of the phase 2 stepwise in accordance with the cumulative lighting time X, wherein Fig. 6a shows a case in which a divided period $\Delta X$ of the cumulative lighting time X is constant and Fig. 6b shows a case in which the divided period $\Delta X$ is changed in accordance with the cumulative lighting time X.

In Figs. 5 and 6, for an unused high pressure discharge lamp with zero cumulative lighting time, a sufficient duration time for the phase 2 is set as an initial value TA2_i to heat the electrodes, while a predetermined maximum value TA2_MAX is set for the duration of the phase 2 in order to prevent an extreme reduction of the lamp life resulting from excessive heating.

Moreover, as shown in Fig. 7, the duration TA2 of the phase 2 may also be set to reach the maximum value TA2_MAX established in advance when the cumulative lighting time X elapses beyond a rated lifetime of the high pressure discharge lamp. For example, Cerameta lamp 150W (MT150CE) manufactured by Panasonic Corporation has a rated lifetime of 12000 hours, and upon of elapse of the cumulative lighting time beyond 12000 hours, the current-time product TA2 in the phase 2 reaches the maximum value TA2_MAX established in advance.

Setting the duration TA2 of the phase 2 in the above manner eliminates excessive stress to a new high pressure discharge lamp and enables sufficient electrode heating for a high pressure discharge lamp of long cumulative lighting time, which easily suffers unstable discharge, thereby realizing stable discharge at the time of transition to the phase 3 regardless of the cumulative lighting time of the high pressure discharge lamp.

Figs. 8a and 8b show waveforms of lamp current in the cases of lighting an unused high pressure discharge lamp and a high pressure discharge lamp at the end of its service life with durations of the phase 2 established in accordance with the cumulative lamp lighting time X as stated above.

Figs. 8a and 8b show that in accordance with cumulative lighting times X1 and X2 (X1 < X2) respectively of the unused high pressure discharge lamp and the high pressure discharge lamp at the end of its service life, durations T1 and T2 (i.e. T1 < T2) of the phase 2 are set, and thus both high pressure discharge lamps form stable discharge in the phase 3.

Referring back to the flowchart in Fig. 4, the above-described phases 1 to 3 of the starting sequence are executed in steps S105 to S107. In the following step S108, an operation to determine lighting of the lamp DL is executed, and if it is determined that no lighting is being made, the process proceeds to the procedure in step S105 and repeats later procedures again.

In contrast, if it is determined in the procedure of step S108 that the lighting of the lamp DL is being made, then in step S109 the lamp lighting state detection part 14 counts and stores the cumulative lighting time X. Then the process returns to the procedure of step S108 to repeat the operation to determine lighting of the lamp DL.

As described above, such a high pressure discharge lamp lighting device according to the first embodiment of the present invention includes the lamp lighting state detection part 14 for counting and storing the cumulative lighting time of the lamp DL so that under the control of the control circuit 15, the duration of the phase 2 of the starting sequence is set in accordance with the cumulative lighting time, which eliminates excessive stress to a new high pressure discharge lamp and enables sufficient electrode heating for a high pressure discharge lamp of long cumulative lighting time, which easily suffers unstable discharge. Thus, both high pressure discharge lamps form stable discharge at the time of transition to the third period.

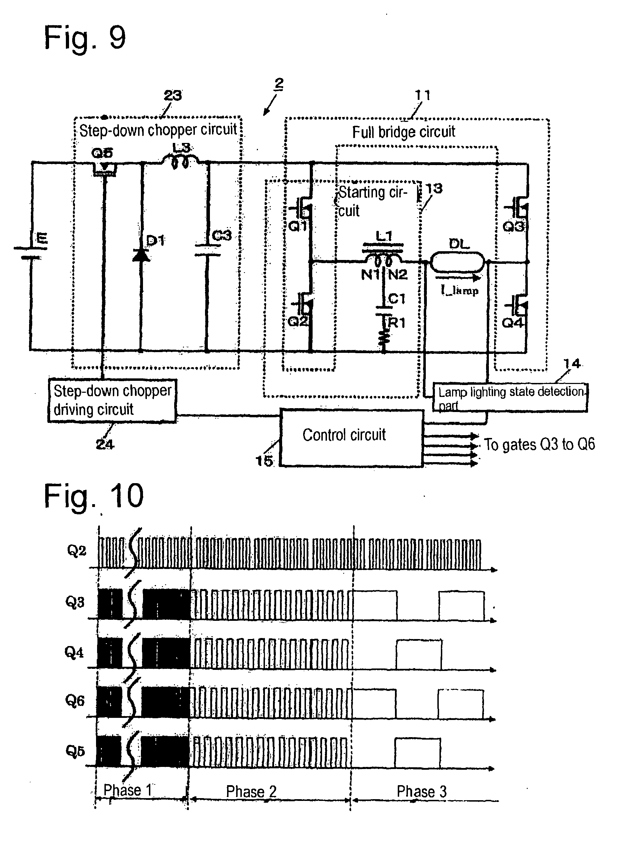

Note that the high pressure discharge lamp lighting device is not limited to the above-described circuit configuration; for example, a circuit configuration as shown in Fig. 9 is also possible including, in place of the step-down chopper circuit 13 shown in Fig. 1, another step-down chopper circuit to step down a voltage outputted from the DC power source E and output to the voltage to the full bridge circuit 11. Note that in Fig. 9, for configurations that are similar to those in Fig. 1, like reference numbers are used and description thereof will be simplified or omitted.

In Fig. 9, a power conversion circuit of a high pressure discharge lamp lighting device 2 is configured to include the full bridge circuit 11 composed of the switching elements Q1 to Q4 and a step-down chopper circuit 23.

The step-down chopper circuit 26 is composed of: a switching element Q5 connected at one end to a high voltage side of the DC power source E and at the other end to an input terminal of the full bridge circuit 11 via an inductor L3; a diode D1 having a cathode connected to a node of the switching element Q5 and the inductor L3 and an anode connected to the ground; and a capacitor C3 connected in parallel with input terminals of the full bridge circuit 11. Note that the second inductor L2 and the second capacitor C2 of the step-down chopper circuit 13 show in Fig 1 are omitted. To the gate of the switching element Q5, a step-down chopper driving circuit 24 controlled by the control circuit 15 is connected.

In the high pressure discharge lamp lighting device 2 configured in the above manner, a current outputted from the DC power source E is controlled by the step-down chopper circuit 26 and supplied to the full bridge circuit 11. This control is carried out by the on/off duty ratio of the switching element Q5, which is driven by the step-down chopper driving circuit 27, as shown in Fig. 10, and thus no PWM control is carried out by turning on/off the switching elements Q1 to Q4 in the full bridge circuit 11 even in the phase 3.

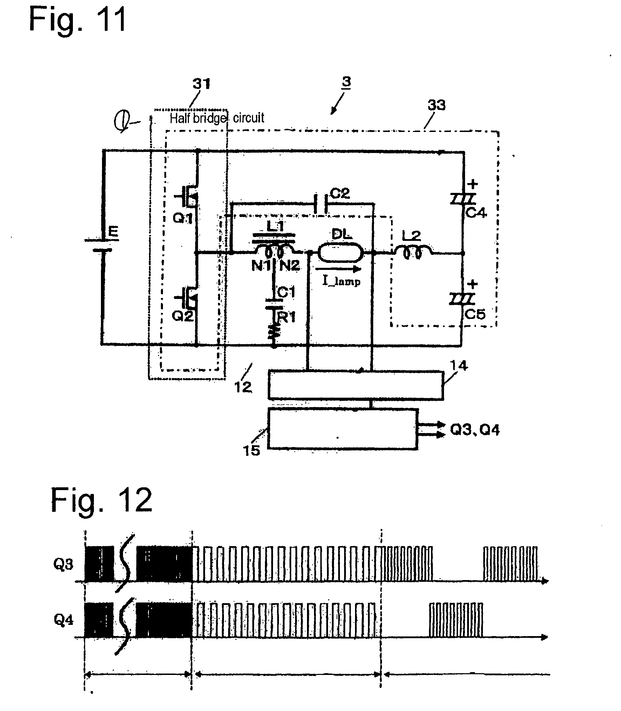

As another example of the high pressure discharge lamp lighting device according to the first embodiment of the present invention, a high pressure discharge lamp lighting device 3 of a circuit configuration shown in Fig. 11 is possible. In Fig. 11, for configurations that are similar to those in Fig. 1, like reference numbers are used and description thereof will be simplified or omitted.

In Fig. 11, the high pressure discharge lamp lighting device 3 is composed of: a half bridge circuit 31 made of two switching elements Q1 and Q2 connected in series; and a step-down chopper circuit 33 in which the switching elements Q3 and Q4 constituting one of the series circuits in the full bridge circuit 11 shown in Fig. 1 are respectively replaced with capacitors C4 and C5.

As shown in Fig. 12, the on/off driving of the switching elements Q1 and Q2 in the half bridge circuit 31 in the phase 1 and the phase 2 is the same as the case of the discharge lamp lighting device 1 shown in Fig. 2, whereas in the phase 3, PWM control is carried out to adjust power outputted to the lamp DL using the on/off duty ratio of the switching elements Q1 and Q2, which should be turned on in a period of no polarity inversion.

(Second embodiment)

A circuit configuration of a high pressure discharge lamp lighting device according to a second embodiment of the present invention is the same as that of the high pressure discharge lamp lighting device according to the first embodiment, and therefore will not be shown in the drawings.

In the high pressure discharge lamp lighting device according to the present embodiment, the control circuit 15 sets the value of a current supplied to the lamp DL in the phase 2 in accordance with the cumulative lighting time X of the lamp stored in the lamp lighting state detection part 14.

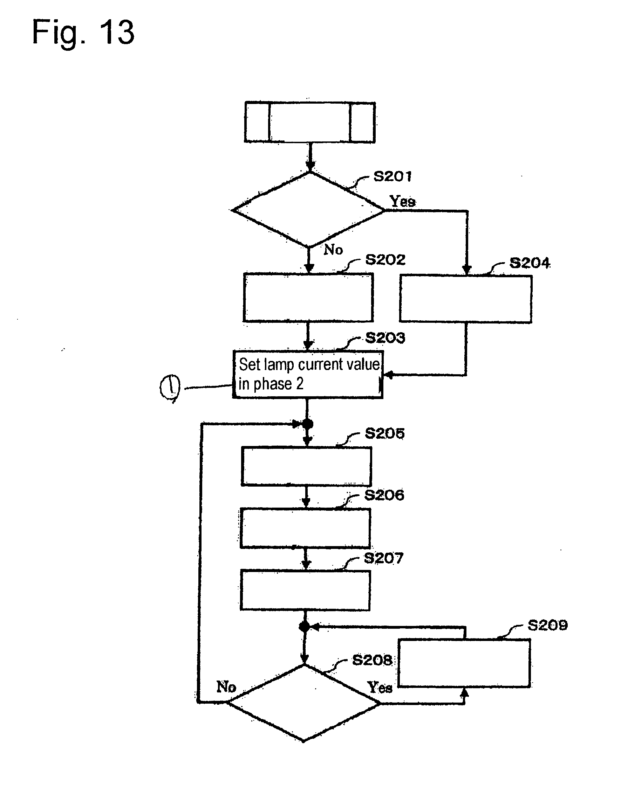

Next, the operation of the high pressure discharge lamp lighting device according to the present embodiment will be described. Fig. 13 is a flowchart to describe an operational procedure of the starting sequence in the discharge lamp lighting device according to the present embodiment. Note that procedures in steps S201, S202 and S204 to S209 in the flowchart shown in Fig. 13 are respectively the same as those in steps S101, S102 and S104 to S109 in the first embodiment as shown in Fig. 4, and therefore will description will be omitted.

In step S203, the control circuit 15 reads the cumulative lighting time X from a memory of the lamp lighting state detection part 14, and sets a lamp current value in the phase 2 in accordance with the cumulative lighting time X that was read.

The lamp current value set in the phase 2 is changed in accordance with the lamp cumulative lighting time X. Fig. 14 shows examples of increasing a lamp current value IA2 set in the phase 2 in accordance with the cumulative lighting time X, wherein Fig. 14a shows a linear increase and Fig. 14b shows a curved increase.

Fig. 15 also shows examples of increasing the lamp current value IA2 set in the phase 2 stepwise in accordance with the cumulative lighting time X, wherein Fig. 15a shows a case in which the divided period $\Delta X$ of the cumulative lighting time X is constant in and Fig. 15b shows a case in which the divided period $\Delta X$ is changed in accordance with the cumulative lighting time X.

In Figs. 14 and 15, for an unused high pressure discharge lamp with zero cumulative lighting time, a sufficient high pressure discharge lamp current value for the phase 2 is set as an initial value IA2 to heat the electrodes, while a predetermined maximum value IA2_MAX is set in order to prevent an extreme reduction of the life of the high pressure discharge lamp resulting from excessive heating.

While the initial value IA2 thus established for the lamp current value is subjected to constant current control by the control circuit 15, other methods include setting the lamp current in accordance with a lamp voltage by using the cumulative lighting time as a parameter.

Fig. 16 shows examples of controlling the lamp current value IA2 set in the phase 2 in accordance with the lamp voltage VA2 by using the cumulative lighting time X as a parameter, wherein Fig. 16a shows constant control and Fig. 16b shows control by a VI curve.

Setting the lamp current value IA2 of the phase 2 in the above manner eliminates excessive stress to a new high pressure discharge lamp and enables sufficient electrode heating for a high pressure discharge lamp of long cumulative lighting time, which easily suffers unstable discharge, thereby realizing stable discharge at the time of transition to the phase 3 regardless of the cumulative lighting time of the lamp.

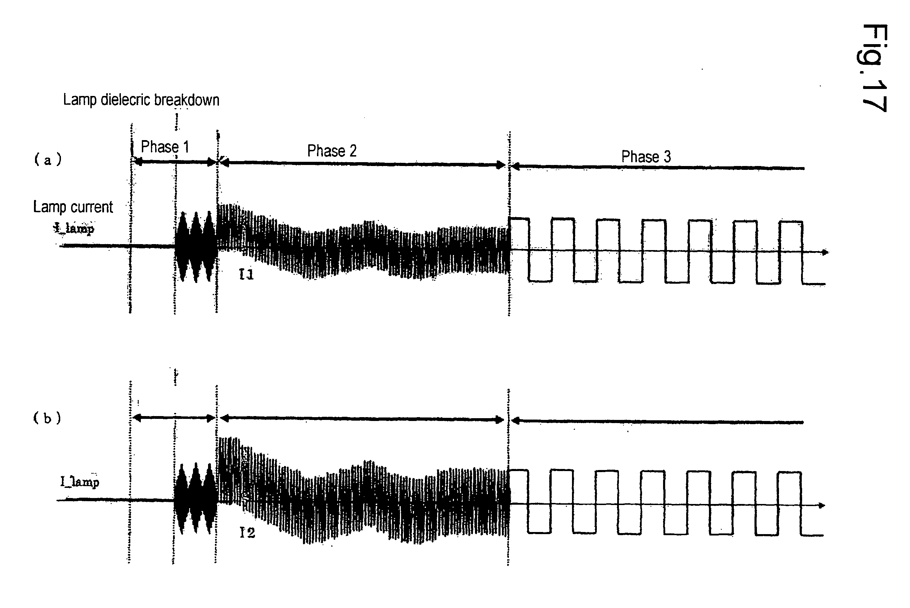

Fig. 17 shows waveforms of lamp currents in the phase 2 that are set in accordance with the lamp cumulative lighting times X, wherein Fig. 17a shows the case of lighting an unused high pressure discharge lamp and Fig. 17b shows the case of lighting a high pressure discharge lamp at the end of its service life.

Fig. 17 shows that in accordance with cumulative lighting times X1 and X2 (X1 < X2) respectively of the unused high pressure discharge lamp and the high pressure discharge lamp at the end of its service life, lamp current values I1 and I2 (i.e. I1 < I2) of the phase 2 are set, and thus both the unused high pressure discharge lamp and the high pressure discharge lamp at the end of its service life form stable discharge in the phase 3.

As described above, such a high pressure discharge lamp lighting device according to the second embodiment of the present invention includes the lamp lighting state detection part 14 for counting and storing the cumulative lighting time of the lamp DL so that under the control of the control circuit 15, the lamp current value in the phase 2 of the starting sequence is set in accordance with the cumulative lighting time X, which eliminates excessive stress to a new high pressure discharge lamp and enables sufficient electrode heating for a high pressure discharge lamp of long cumulative lighting time, which easily suffers unstable discharge. Thus, both high pressure discharge lamps form stable discharge at the time of transition to the third period.

(Third embodiment)

A circuit configuration of a high pressure discharge lamp lighting device according to a third embodiment of the present invention is the same as that of the high pressure discharge lamp lighting device according to the first embodiment, and therefore will not be shown in the drawings.

In the discharge lamp lighting device according to the present embodiment, the control circuit 15 establishes a current-time product by combining control of a duration TA2 of the phase 2 according to the first embodiment and control of a current value IA2 of the high pressure discharge lamp in the phase 2 according to the second embodiment, and controls the amount of power supplied to the lamp DL in the phase 2 in accordance with the lamp cumulative lighting time X on the basis of the current-time product that was set.

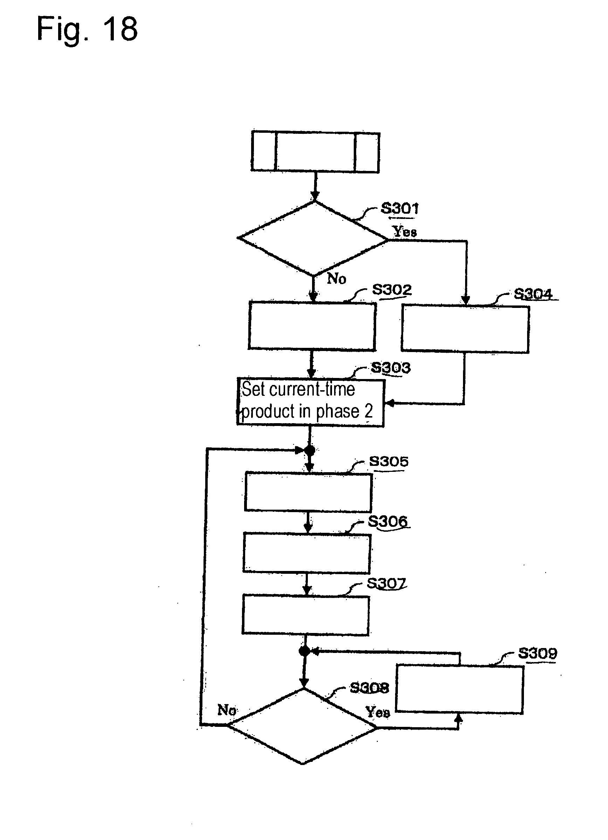

Next, the operation of the high pressure discharge lamp lighting device according to the present embodiment will be described. Fig. 18 is a flowchart to describe an operational procedure of the starting sequence in the present embodiment. Note that procedures in steps S301, S302 and S304 to S309 in the flowchart show in Fig. 18 are respectively the same as those in steps S101, S102 and S104 to S109 shown in Fig. 4, and description thereof will be omitted.

In step S303, the control circuit 15 establishes a current-time product of the lamp in the phase 2 in accordance with the cumulative lighting time X read from a memory of the lamp lighting state detection part 14.

The current-time product established in the phase 2 is changed in accordance with the lamp cumulative lighting time X. Fig. 19 shows examples of increasing a current-time product ITA2 established in the phase 2 in accordance with the cumulative lighting times X, wherein Fig. 19a shows a linear increase and Fig. 19b shows a curved increase.

In Fig. 19, for an unused high pressure discharge lamp with zero cumulative lighting time, a sufficient current-time product of a high pressure discharge lamp is established in the phase 2 as an initial value ITA2_j to heat the electrodes, and a predetermined maximum value ITA2_MAX is set to prevent an extreme reduction of the lamp life resulting from excessive heating.

As described above, such a high pressure discharge lamp lighting device according to the third embodiment of the present invention includes the lamp lighting state detection part 14 for counting and storing the cumulative lighting time of the lamp DL so that under the control of the control circuit 15, the current-time product of the lamp in the phase 2 of the starting sequence is established in accordance with the cumulative lighting time X and the amount of current supplied to the high pressure discharge lamp is controlled in accordance with the established current-time product, which eliminates excessive stress to a new high pressure discharge lamp and enables sufficient electrode heating for a high pressure discharge lamp of long cumulative lighting time, which easily suffers unstable discharge. Thus, both high pressure discharge lamps form stable discharge at the time of transition to the third period.

(Fourth embodiment)

A circuit configuration of a high pressure discharge lamp lighting device according to a fourth embodiment of the present invention is the same as that of the high pressure discharge lamp lighting device according to the first embodiment, and therefore will not be shown in the drawings.

In the discharge lamp lighting device according to the present embodiment, the lamp lighting state detection part 14 detects and adds the number of times of starting of the lamp DL, and stores the times as a cumulative starting count Y. The control circuit 15 establishes a current-time product in the phase 2 in accordance with the cumulative starting count Y of the lamp DL, and controls the amount of power supplied to the lamp DL based on the established current-time product.

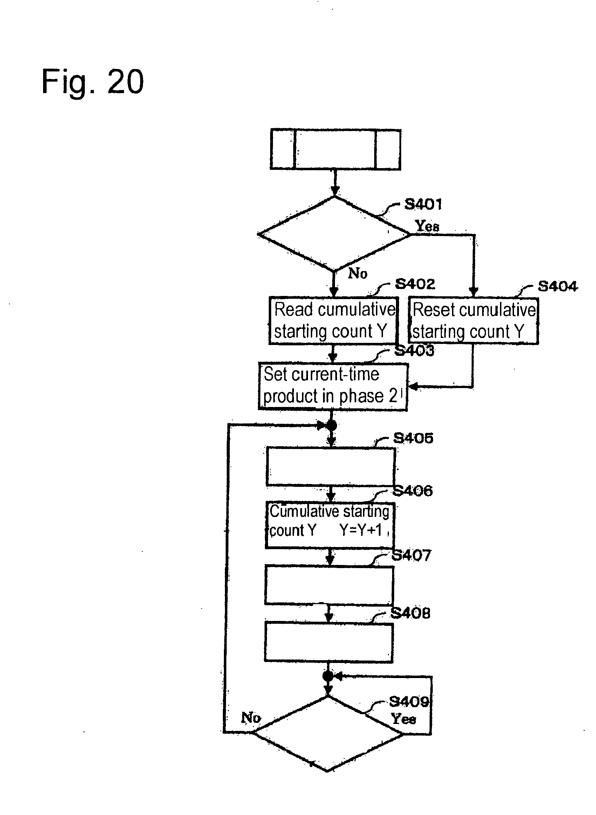

Next, the operation of the high pressure discharge lamp lighting device according to the present embodiment will be described. Fig. 20 is a flowchart to describe an operational procedure of the starting sequence in the present embodiment.

After the power source is turned on, it is determined in step S401 whether the high pressure discharge lamp DL is replaced with a new one. If the detection result shows that the high pressure discharge lamp DL is not replaced with a new one, the cumulative starting count Y stored in the lamp lighting state detection part 14 is read (step S402).

Next, a current-time product of the lamp in the phase 2 is established in accordance with the cumulative starting count Y that was read (step S403).

In contrast, if it is determined in the procedure of step S401 that the high pressure discharge lamp DL is replaced with a new one, the cumulative starting count Y stored in the lamp lighting state detection part 14 is reset in step S404, and the process proceeds to the procedure of step S403.

The current-time product established in the phase 2 is as described in the third embodiment, and therefore description will be omitted.

In step S405, the phase 1 of the starting sequence described above is executed under the control of the control circuit 15. Then in step S406, 1 is added to the cumulative starting count Y of the lamp DL and the increased cumulative starting count Y is stored.

In step S407, under the control of the control circuit 15, the phase 2 of the starting sequence described above is executed based on the established current-time product, and the phase 3 is executed in the following step S408.

Next, an operation to determine the lighting of the lamp DL is executed (step S409), and if it is determined that no lighting is being made, the process returns to step S405 to repeat later procedures again.

As described above, such a high pressure discharge lamp lighting device according to the fourth embodiment of the present invention includes the lamp lighting state detection part 14 for counting and storing the cumulative starting count of the lamp DL so that under the control of the control circuit 15, the current-time product of the lamp in the phase 2 of the starting sequence is established in accordance with the cumulative starting count Y and the amount of current supplied to the high pressure discharge lamp DL in the phase 2 is controlled in accordance with the established current-time product ITA2, which eliminates excessive stress to a new high pressure discharge lamp and enables sufficient electrode heating for a high pressure discharge lamp of long cumulative lighting time, which easily suffers unstable discharge. Thus, both high pressure discharge lamps form stable discharge at the time of transition to the third period.

Note that it is also possible to set the amount of power supplied to the lamp DL in the phase 2 from both information on the above-described cumulative starting count Y of the lamp DL and information on the cumulative lighting time X of the lamp DL as described in the first to third embodiments.

(Fifth embodiment)

A circuit configuration of a high pressure discharge lamp lighting device according to a fifth embodiment of the present invention is the same as that of the high pressure discharge lamp lighting device according to the first embodiment, and therefore will not be shown in the drawings.

In the discharge lamp lighting device according to the present embodiment, the lamp lighting state detection part 14 divides the voltage across the lamp DL in lighting by a resistor or other means and detects an effective value of the lamp voltage in the phase 3. Then the lamp lighting state detection part 14 stores data of a lamp voltage effective value at the time of initial lighting when the lamp DL is mounted and data of a lamp voltage effective value at the time of recent lighting. Note that a re-ignition voltage may also be used in place of the effective value of the lamp voltage in the phase 3.

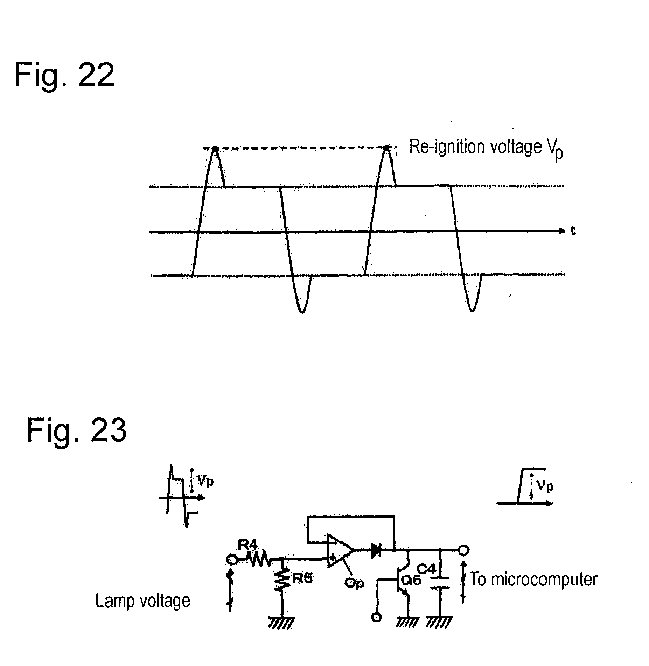

Fig. 22 exemplifies a waveform of a lamp voltage in the stable phase 3, wherein a re-ignition voltage Vp is at the peak of one cycle of lamp voltage.

Fig. 23 shows an example of a circuit to detect the re-ignition voltage Vp of the lamp voltage, wherein the voltage across the lamp is divided by resistors R4 and R5, followed by detecting the peak value Vp of the lamp voltage by using a comparator Op.

The control circuit 15 reads the lamp voltage effective values at recent and initial lighting from the lamp lighting state detection part 14 so as to obtain a difference therebetween, followed by establishing a current-time product in the phase 2 in accordance with the difference of the effective values and controlling the amount of power supplied to the lamp DL based on the established current-time product.

In general, a lamp with a long cumulative lighting time (i.e., old lamp) tends to have a high discharge maintaining voltage and also a high lamp voltage at the time of stable lighting. The present embodiment utilizes this nature in controlling the amount of power supplied to the lamp DL, in order to improve the stability of the lamp DL during discharge.

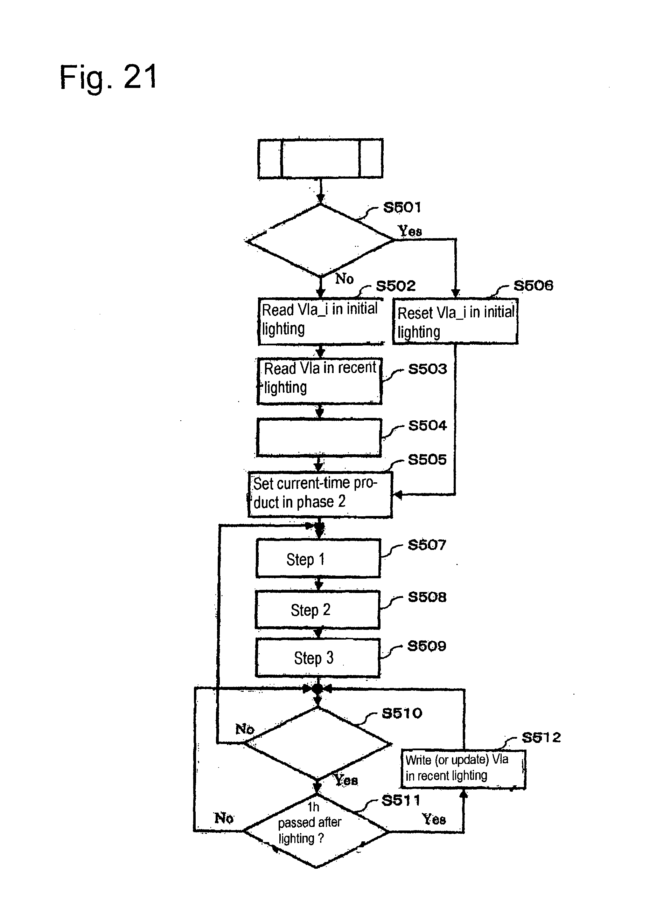

Next, the operation of the high pressure discharge lamp lighting device according to the present embodiment will be described. Fig. 21 is a flowchart to describe an operational procedure of the starting sequence in the present embodiment.

After the power source is turned on, it is determined in step S501 whether the high pressure discharge lamp DL is replaced with a new one. If the determination results shows that the high pressure discharge lamp DL is not replaced with a new one, a lamp voltage effective value Vla_i of initial lighting is read from the lamp lighting state detection part 14 (step S502).

Next, a lamp voltage effective value Vla of recent lighting is read from the lamp lighting state detection part 14 (step S503), and a difference $\Delta$Vla relative to the lamp voltage effective value Vla_i of initial lighting is obtained (step S504).

Then, a current-time product of the lamp in the phase 2 is established in accordance with the difference $\Delta$Vla in lamp voltage effective value (step S505).

In contrast, if it is determined in the procedure in step S501 that the high pressure discharge lamp DL is replaced with a new one, the lamp voltage effective value Vla_i of initial lighting stored in the lamp lighting state detection part 14 is reset in step S506, and the process is skipped to the procedure in step S505.

The current-time product established in the phase 2 is changed in accordance with the difference $\Delta$Vla in lamp voltage effective value. Fig. 24 shows examples of increasing the current-time product ITA2 established in the phase 2 in accordance with the difference $\Delta$VIA in lamp voltage effective value, wherein Fig. 24a shows a linear increase and Fig. 24b shows a curved increase.

In Fig. 24, for an unused high pressure discharge lamp with zero cumulative lighting time, a sufficient current-time product is established in the phase 2 as an initial value ITA2_j to heat the electrodes, and a predetermined maximum value ITA2_MAX is set to prevent an extreme reduction of the life of the high pressure discharge lamp resulting from excessive heating.

Referring back to the flowchart in Fig. 21, the procedures in steps S507 to S510 are respectively the same as those in steps S105 to S108 according to the first embodiment shown in Fig. 4, and therefore description will be omitted.

In step S511, whether one hour has passed since the start of lighting of the lamp DL is determined, and if it is determined that one hour has not passed yet, the process returns to the procedure in step S510 to repeat later procedures.

In contrast, if it is determined in step S511 that one hour has passed since the start of lighting, then in step S512 data update is carried out by writing the effective value VIa of the lamp voltage in recent lighting to the lamp lighting state detection part 14.

As described above, such a high pressure discharge lamp lighting device according to the fifth embodiment of the present invention includes the lamp lighting state detection part 14 for detecting and storing the lamp voltage effective values of initial and recent lighting of the lamp DL so that the current-time product ITA2 of the lamp is established in the phase 2 of the starting sequence in accordance with a difference between the detected lamp voltage effective values, and the amount of power supplied to the high pressure discharge lamp DL in the phase 2 is controlled based on the established current-time product ITA2. This realizes optimum electrode heating in the phase 2 from the initial use of the lamp through the end of its service life, thereby preventing extreme adverse effects to the life of the lamp resulting from excessive heating. As a result, stable discharge is formed at the time of transition to the phase 3.

The discharge lamp lighting device according to the present embodiment also reduces the frequency of detection of the lighting state of the lamp DL, thereby simplifying the circuit configuration including the storage capacity of the memory.

(Sixth embodiment)

A circuit configuration of a high pressure discharge lamp lighting device according to a sixth embodiment of the present invention is the same as that of the high pressure discharge lamp lighting device according to the first embodiment, and therefore will not be shown in the drawings.

In the high pressure discharge lamp lighting device according to the present embodiment, the lamp lighting state detection part 14 detects and stores, when the lamp DL is turned on, an electrical characteristic of starting after the dielectric breakdown.

The control circuit 15 reads the starting electrical characteristic from the lamp lighting state detection part 14; establishes a current-time product in the phase 2 in accordance with the starting electrical characteristic; and controls the amount of power supplied to the lamp DL based on the established current-time product.

In general, the electrical characteristic obtained in starting shows information regarding an individual difference caused by impurities in the high pressure discharge lamp tube or other factors. A high pressure discharge lamp which includes a large amount of impurities tends to have a high discharge maintaining voltage and also a high lamp voltage at the time of starting. The present embodiment utilizes this nature in controlling the amount of power supplied to the lamp DL, in order to improve the stability of the lamp DL during discharge.

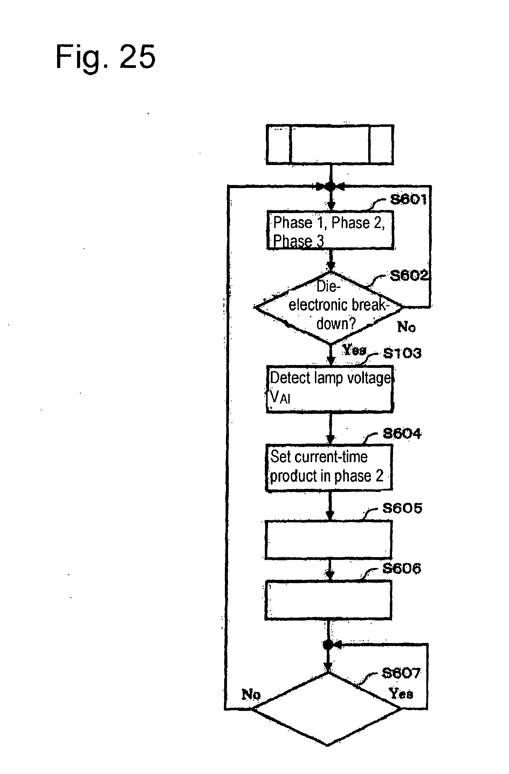

Next, the operation of the high pressure discharge lamp lighting device according to the present embodiment will be described. Fig. 25 is a flowchart to describe an operational procedure of the starting sequence according to the present embodiment.

After the power supply is turned on, in step S601 the phase 1 of the starting sequence described above is executed to determine whether a dielectric breakdown occurs in the lamp DL (step S602).

If it is determined in the procedure in step S602 that no dielectric breakdown occurs in the lamp DL, the process returns to the procedure in step S601 to repeat later procedures.

In contrast, if it is determined in step S602 that a dielectric breakdown occurs in the lamp DL, the lamp lighting state detection part 14 detects a lamp voltage VA1 during starting of the lamp DL (step S603).

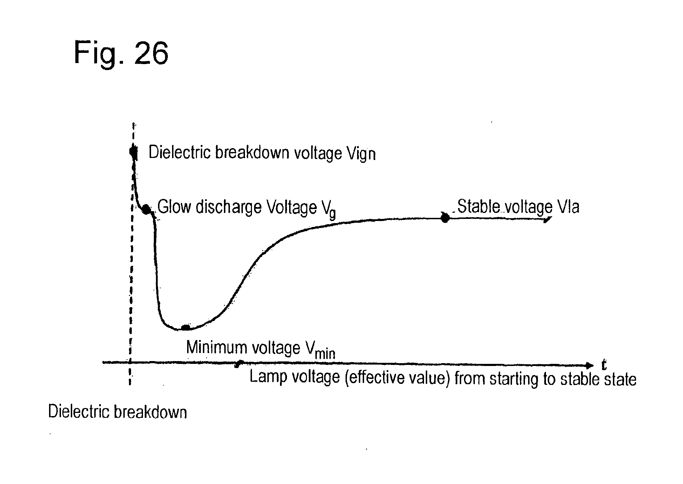

Fig. 26 shows an example of the lamp voltage VA1 to be detected, including a minimum voltage Vmin, a dielectric breakdown voltage Vign, and a voltage Vg in glow discharge. For detection of the minimum voltage Vmin, a voltage between the electrodes of the lamp DL is divided by a resistor and sampled by a microcomputer or other means. For detection of the voltage VG during glow discharge, a lamp voltage is measured at the time when a lamp current ILA is extremely small or, for example, at approximately 10mA.

In step S604, a current-time product of the lamp in the phase 2 is established in accordance with the detected lamp voltage VA1.

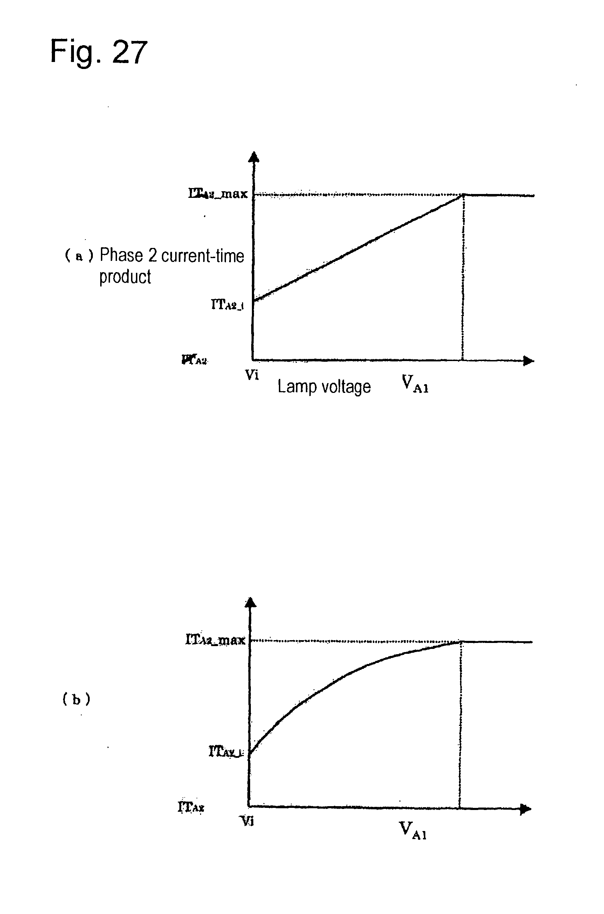

A current-time product established in the phase 2 is changed in accordance with the lamp voltage VA1. Fig. 27 shows examples of increasing the current-time product ITA2 established in the phase 2 in accordance with the lamp voltage VA1, wherein Fig. 27a shows a linear increase and Fig. 27b shows a curved increase.

In step S605, under the control of the control circuit 15, the phase 2 of the starting sequence described above is executed based on the established current-time product and the phase 3 is executed in the following step S506.

Next, an operation to determine the lighting of the lamp DL is executed (step S607), and if it is determined that no lighting is being made, the process returns to step S601 to repeat later procedures.

Note that the operational procedure as described above has such an advantage that information regarding an individual difference of the lamp can be obtained without preparing a memory in the lamp lighting state 14. However, if the electrical characteristic is detected before starting of the phase 2 in the starting sequence, it is impossible to detect the electrical characteristic after the phase 2. For example, when the minimum voltage Vmin shown in Fig. 26 is to be measured, the lamp voltage is not reduced enough in the phase 1, resulting in measurement of a value higher than the actual minimum voltage Vmin.

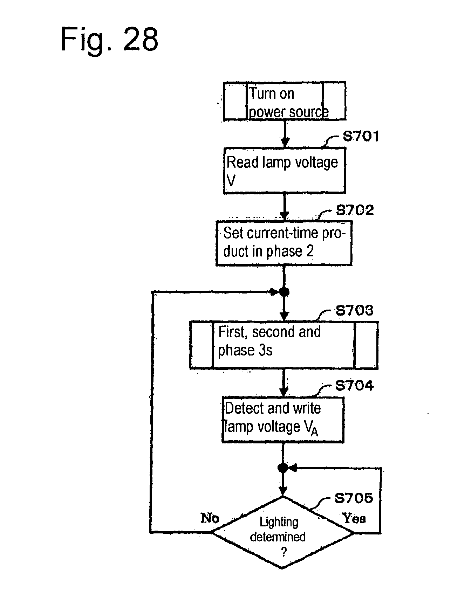

This problem can be resolved by executing the procedure on the flowchart shown in Fig. 28.

After the power supply is turned on, in step S701 the lamp voltage VA stored in advance is read from a memory of the lamp lighting state 14.

Next, the current-time product of the lamp in the phase 2 is established in accordance with the lamp voltage VA that was read.

In the following step S703, the phases 1 to 3 of the starting sequence are executed as a sub-routine as described above.

Then the lamp voltage VA is detected and stored in the memory of the lamp lighting state 14 (step S704), followed by executing the operation to determine the lighting of the lamp DL (step S705).

Thus, the electrical characteristic of the lamp DL observed in previous lighting, between starting of the lamp DL to its stable discharge, may be detected and stored in the memory of the lamp lighting state 14 so that when the lamp DL starts next time, the amount of power supplied to the high pressure discharge lamp in the phase 2 may also be established in accordance with the stored electrical characteristic.

As described above, such a high pressure discharge lamp lighting device according to the sixth embodiment of the present invention uses the lamp lighting state detection part 14 to detect a starting electrical characteristic observed after a dielectric breakdown and establish the current-time product ITA2 of the lamp in the phase 2 of the starting sequence in accordance with the detected starting electrical characteristic, and the amount of power supplied to the high pressure discharge lamp DL in the phase 2 is controlled based on the established current-time product ITA2. This realizes optimum electrode heating in the phase 2 regardless of the individual difference of the high pressure discharge lamp such as the amount of impurity contaminating the lamp. As a result, stable discharge is formed at the time of transition to the phase 3.

(Seventh embodiment)

In general, if a tube of a high pressure discharge lamp is contaminated with, for example, water as an impurity, water separates into hydrogen and oxygen. It is said that the hydrogen of water gradually leaves outside the tube in the course of lighting of the high pressure discharge lamp and is completely eliminated in approximately 100 hours of lighting. However, the oxygen remains in the tube and gradually combines with fluorescent material on the tube wall of the high pressure discharge lamp, thereby causing deterioration of startability of the high pressure discharge lamp.

The present embodiment prevents this problem by: detecting and storing an electrical characteristic as information regarding an individual difference of the high pressure discharge lamp within approximately 100 hours of lighting of the high pressure discharge lamp; and establishing, upon elapse of 100 hours from the start of lighting, a current-time product in the phase 2 in accordance with the stored electrical characteristic in order to control the amount of power supplied to the high pressure discharge lamp.

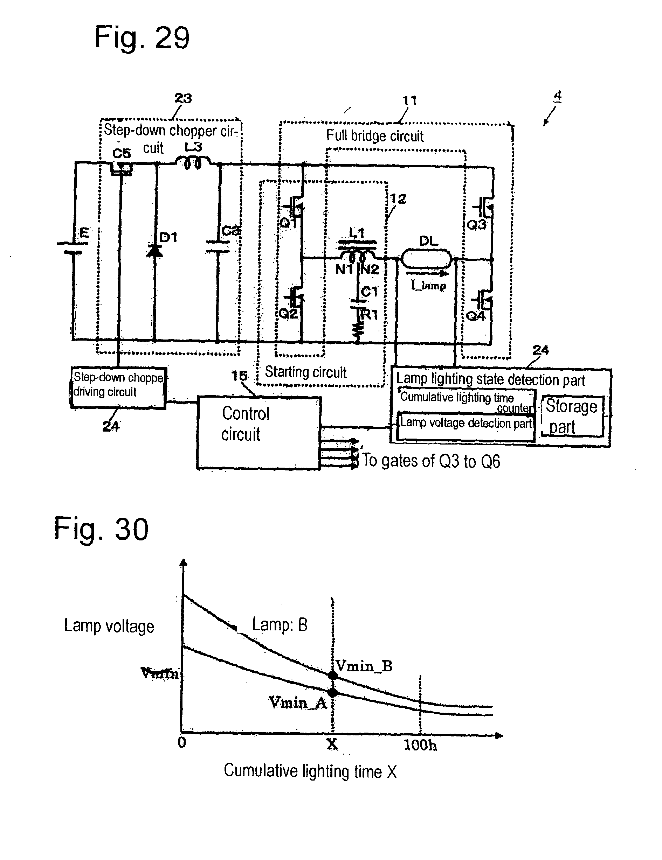

Fig. 29 shows a schematic configuration of a high pressure discharge lamp lighting device according to a seventh embodiment of the present invention. A high pressure discharge lamp lighting device 4 according to the present embodiment is configured to have a lamp lighting state detection part 24 in place of the lamp lighting state detection part 14 in the high pressure discharge lamp lighting device 2 according to the first embodiment shown in Fig. 9. Note that in Fig. 29, for configurations that are similar to those in Fig. 9, like reference numbers are used and description thereof will be simplified or omitted.

The lamp lighting state detection part 24 includes a cumulative lighting time counter 241, a lamp voltage detection part 242, and a storage part 243.

The cumulative lighting time counter 241 constantly counts the period of time in which the lamp DL lights, and stores the value of the time in the storage part 243. The stored value is maintained even if the power source is turned off and power supply stops.

The lamp voltage detection part 242 detects a lamp electrical characteristic obtained within a predetermined cumulative lighting period of time after mounting the lamp DL and stores the lamp electrical characteristic in the storage part 243. The stored lamp electrical characteristic is maintained until the lamp DL is replaced. The lamp electrical characteristic in the present embodiment refers to a minimum lamp voltage Vmin detected during the period from the dielectric breakdown of the lamp DL to the starting of the phase 2, and as the predetermined cumulative lighting time, 100 hours is set.

The minimum lamp voltage Vmin decreases with the elapse of the cumulative lighting time X, as shown in Fig. 30. Also, the minimum lamp voltage Vmin is different depending on the high pressure discharge lamp. In Fig. 30, dots indicate minimum lamp voltages Vmin_A and Vmin_B respectively for high pressure discharge lamps A and B at time X, which is within 100 hours of cumulative lighting time.

Note that the lamp electrical characteristic to be detected is not limited to the minimum lamp voltage Vmin. Examples include the dielectric breakdown voltage Vign and the voltage Vg in glow discharge of a lamp as shown in Fig. 26, the lamp voltage effective value Vls in stable lighting, and even the re-ignition voltage Vp.

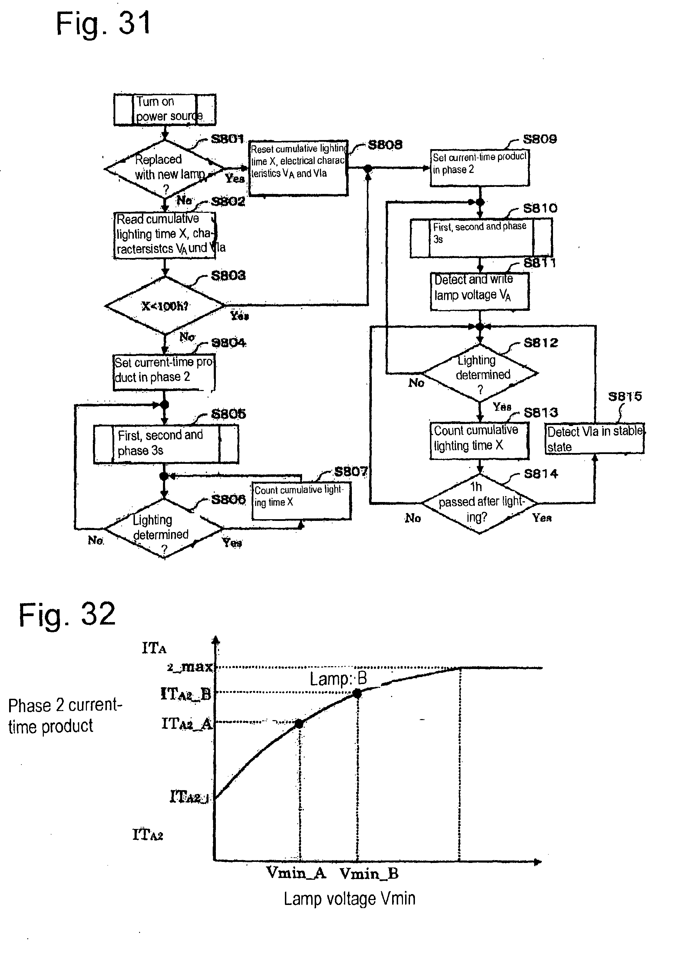

Next, the operation of the starting sequence in the high pressure discharge lamp lighting device according to the present embodiment configured in the above manner will be described. Fig. 31 is a flowchart to describe an operational procedure of the starting sequence according to the present embodiment.

After the power source is turned on, it is determined in step S501 whether the high pressure discharge lamp DL is replaced with a new one. If the determination results shows that the high pressure discharge lamp DL is not replaced with a new one, the cumulative lighting time X, the minimum lamp voltage Vmin, and the lamp voltage effective value Vla are read from the lamp lighting state detection part 24.

Next, it is determined whether the cumulative lighting time X that was read is shorter than 100 hours (step S803).

If the determination result in step S803 shows that the cumulative lighting time X is 100 hours or more, the current-time product ITA2 of the lamp is established in the phase 2 in accordance with the minimum lamp voltage Vmin that was read (step S804).

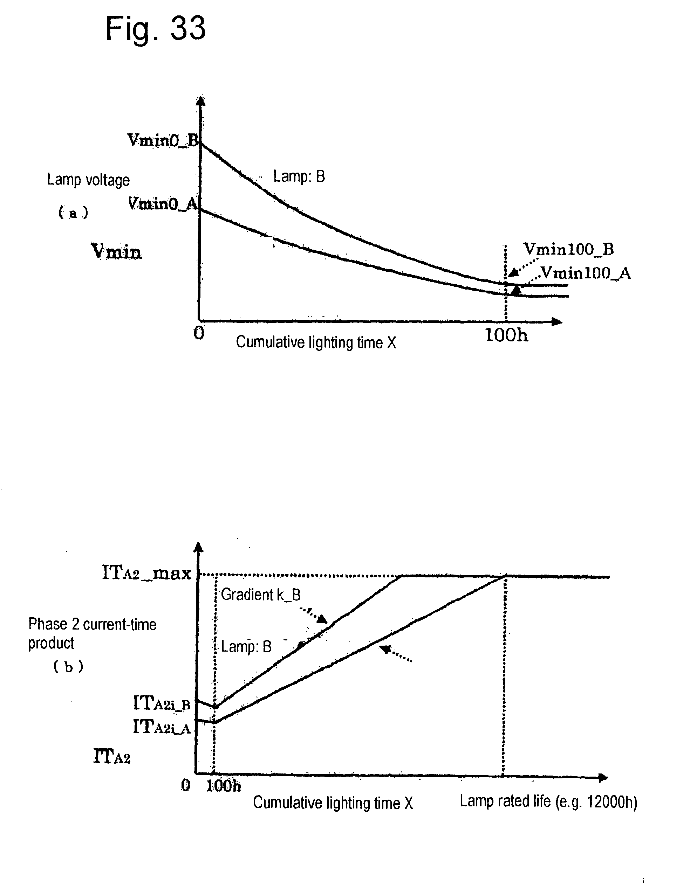

The minimum lamp voltage Vmin is calculated as, for example, initial data Vmin [0 - 100H], which is an average value of Vmin at X=0 and Vmin at X=100 hours as shown in Fig. 33 and stored in the storage part 243 of the lamp lighting state detection part 24. This value is maintained until the high pressure discharge lamp is replaced with a new one.

Then, for later starting of the lamp, the current-time product ITA2 is established in the phase 2 in accordance with the value of the stored initial data Vmin [0-100H]. In this case, ITA2 in the phase 2 is established to be larger in accordance with a larger value of Vmin [0 - 100H].

Note that the above-described lighting initial data Vmin [0-100H] is not limited to the average value of Vmin obtained at two different points of time, X=0 and X=100 hours, and may also be an average value of a continuous distribution when X is 0 to 100 hours. It is also possible to use a Vmin obtained at a predetermined lighting period of time X1 such as 0 hours and 50 hours.

The current-time product ITA2 is established to be larger in accordance with a larger value of the minimum lamp value Vmin in each lamp as shown in Fig. 32.

In step S805, under the control of the control circuit 15, the phases 1 to 3 of the starting sequence described above are executed as a sub-routine based on the established current-time product.

Further, an operation to determine the lighting of the lamp DL is executed (step S806), and if it is determined that no lighting is being made, the process will return to step S805 to execute the phases 1 to 3 again a sub-routine.

In contrast, if it is determined in the procedure of step S806 that the lighting of the lamp DL is being made, then in step S807 the cumulative lighting time counter 241 counts the cumulative lighting time X of the lamp lighting state detection part 24.

If it is determined in the procedure in step S801 that the high pressure discharge lamp DL is replaced with a new one, the cumulative lighting time X, the minimum lamp voltage Vmin, and the lamp voltage effective value Vla that are stored in the lamp lighting state detection part 24 are reset (step S808).

Then, in step S809, the current-time product ITA2 of the lamp in the phase 2 is established in accordance with the minimum lamp voltage Vmin. This procedure is carried out similarly when the cumulative lighting time X is within 100 hours in prior step S803.

In step S810, the phases 1 to 3 of the starting sequence are executed as a sub-routine based on the established current-time product.

Next, the lamp voltage detection part 242 of the lamp lighting state detection part 24 detects the lamp voltage VA, and it is stored in the storage part 243.

Then, an operation to determine lighting of the lamp DL is executed (step S812), and if it is determined that no lighting is being made, the process returns to step S810 to repeat later procedures.

In contrast, if it is determined in the procedure in step S812 that lighting of the lamp DL is being made, then in step S813 the cumulative lighting time counter 241 of the lamp lighting state detection part 24 counts the cumulative lighting time X so as to determine whether one hour has passed since the start of lighting of the lamp DL (step S814).

If the determination result shows that one hour has not passed yet, the process returns to the procedure in step S812 to repeat later procedures.

Also, if it is determined in the procedure in step S814 that one hour has passed since the start of lighting, then in step S815 the lamp voltage detection part 242 of the lamp lighting state detection part 24 detects the lamp voltage effective value Vla in stable discharge, followed by the procedure in step S812 to repeat later procedures.

As described above, such a high pressure discharge lamp lighting device according to the seventh embodiment of the present invention establishes the current-time product ITA2 of the lamp in the phase 2 of the starting sequence in accordance with a minimum lamp voltage for dielectric breakdown as individual information of the lamp, and controls the amount of power supplied to the high pressure discharge lamp DL in the phase 2 on the basis of the current-time product ITA2 to be established. This realizes optimum electrode heating in the phase 2 regardless of the individual difference of the high pressure discharge lamp such as the amount of impurity contaminating the lamp. As a result, stable discharge is formed at the time of transition to the phase 3.

(Eighth embodiment)

A circuit configuration of a high pressure discharge lamp lighting device according to an eighth embodiment of the present invention is the same as that of the high pressure discharge lamp lighting device 4 according to the seventh embodiment shown in Fig. 29, and therefore will not be shown in the drawings.

The present embodiment differs from the seventh embodiment in that the information regarding individual difference of the high pressure discharge lamp detected to establish the current-time product ITA2 includes not only the electrical characteristic of the lamp but also the cumulative lighting time similar to that of the first embodiment.

The operation of the high pressure discharge lamp lighting device according to the present embodiment will be described below.

In Fig. 29, a lamp voltage detection part 243 detects, as the information regarding the individual difference of the high pressure discharge lamp, the minimum lamp voltage Vmin obtained between the dielectric breakdown of the lamp DL and the starting of the phase 2 when the cumulative lighting time X is less than 100 hours, and stores the minimum lamp voltage Vmin in a storage part 243. Then, this value is read to establish the current-time product ITA2.

In contrast, in the case in which the cumulative lighting time X has passed 100 hours or more, the current-time product ITA2 is set to be larger as the cumulative lighting time X is increased. With the use of a minimum lamp voltage Vmin obtained at a cumulative lighting time X of less than 100 hours and stored in the storage part 243, the lighting initial data Vmin [0-100H] of the minimum lamp voltage Vmin is calculated to correct the establishment of the current-time product ITA2.

As shown in Fig. 33, the lighting initial data Vmin [0 - 100H] is calculated as an average value of Vmin at X=0 and Vmin at X=100 hours. Then, the gradient of the current-time product ITA2 relative to the cumulative lighting time X is corrected in accordance with the value of Vmin [0-100H].

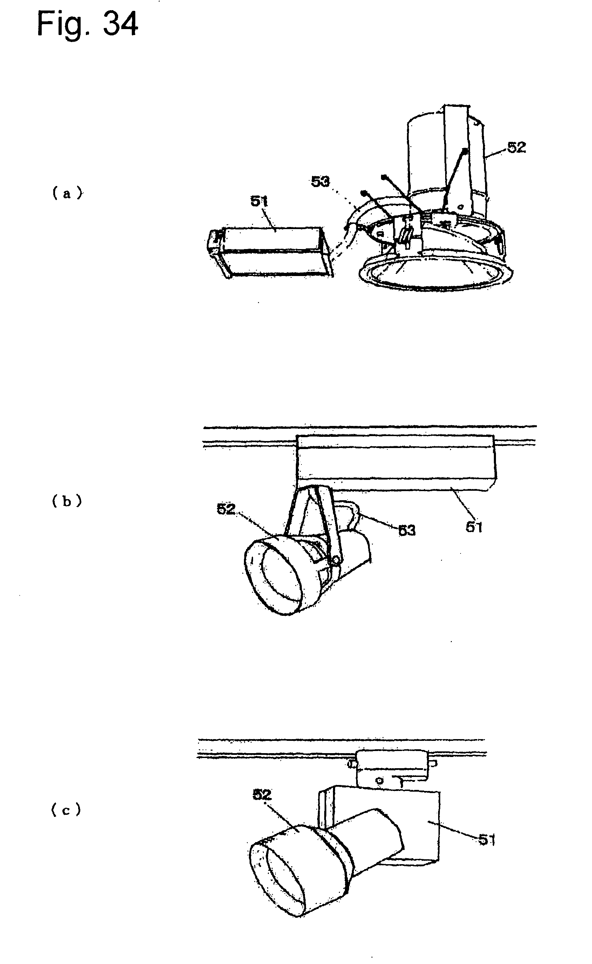

For example, as shown in Fig. 33, the minimum lamp voltages Vmin relative to the cumulative lighting times X of the lamps A and B are such that the lamp B shows a larger value in the range of the cumulative lighting time of from 0 to 100 hours, whereby the lamp B is also larger in the lighting initial data Vmin [0-100H] of the minimum lamp voltage Vmin. Thus, the gradient of the current-time product ITA2 relative to the cumulative lighting time X is corrected so as to be larger in the lamp B as shown in Fig. 34.

Note that the above-described lighting initial data Vmin [0-100H] is not limited to the average value of Vmin obtained at two points of time, X=zero and X =100 hours, and may also be an average value of Vmin in continuous distribution when X is 0 to 100 hours. It is also possible to use a Vmin obtained at a predetermined lighting period of time X1 such as 0 hours and 50 hours.

As described above, such a high pressure discharge lamp lighting device according to the eighth embodiment of the present invention establishes the current-time product ITA2 of the lamp in the phase 2 of the starting sequence in accordance with a minimum lamp voltage after dielectric breakdown and the cumulative lighting time of the lamp as individual information of the lamp, and controls the amount of power supplied to the high pressure discharge lamp DL in the phase 2 on the basis of the current-time product ITA2 to be established. This realizes optimum electrode heating in the phase 2 regardless of the individual difference and the cumulative lighting time of the high pressure discharge lamp. As a result, stable discharge is formed at the time of transition to the phase 3.

(Ninth aspect)

A ninth aspect of the present invention provides illumination fixtures using the high pressure discharge lamp lighting device according to any of the first to eighth embodiments. Fig. 34a is a perspective view showing an appearance of a downlight which is a kind of the illumination fixtures according to the ninth aspect, and Figs. 34a and 34b are perspective views showing appearances of spotlights.

Each of the illumination fixtures shown in Figs. 34a to 34c includes a fixture main body 51 in which any of the high pressure discharge lamps 1 to 4 according to the first to eighth embodiments is stored, and a lamp body 52 storing the lamp DL and a lamp socket. Each of the illumination fixtures shown in Figs. 34a and 34b also includes a power supply line 53 for electrically connecting any of the high pressure discharge lamp lighting devices 1 to 4 and the lamp socket to each other.

It is also possible to construct an illumination system by using a plurality of the illumination fixtures shown in any of Figs. 34a to 34c along with a control circuit for controlling each of the illumination fixtures.

Such illumination fixtures and illumination system according to the ninth embodiment of the present invention make it possible to realize stable starting of lighting regardless of the cumulative lighting time of the lamp.

[Description of Reference Numerals]

| 1 to 4 | High pressure discharge lamp lighting device |
|--------|-----------|
| 11 | Full bridge circuit |
| 12 | Starting circuit |
| 13 | Chopper |
| 14, 24 | Lamp lighting state detection part |
| 15 | Starting circuit |
| 241 | Cumulative lighting time counter |
| 242 | Lamp voltage detection part |
| 243 | Storage part |
| 15 | Control circuit |
| 51 | Fixture main body |
| 52 | Lamp body |
| 53 | Power supply line |
| DL | High pressure discharge lamp |

## Claims

1. A high pressure discharge lamp lighting device comprising:

   a power conversion circuit for converting DC power into AC power; a starting circuit for generating a high voltage to start a high pressure discharge lamp; and a control circuit for controlling the power conversion circuit and the starting circuit, the high pressure discharge lamp lighting device having: an electrode heating period for heating electrodes of the high pressure discharge lamp after a dielectric breakdown of the high pressure discharge lamp; and a stable period for maintaining stable discharge of the high pressure discharge lamp by supplying an AC current thereto, wherein
   the high pressure discharge lamp lighting device comprises a lamp lighting state detection part for detecting a lighting state of the high pressure discharge lamp; and
   the control circuit sets an amount of power supplied to the high pressure discharge lamp in the electrode heating period in accordance with information on the lighting state of the high pressure discharge lamp detected by the lamp lighting state detection part.

2. The high pressure discharge lamp lighting device according to claim 1, wherein the lighting state information is a cumulative lighting time of the high pressure discharge lamp.

3. The high pressure discharge lamp lighting device according to claim 1, wherein the lighting state information is an electrical characteristic of the high pressure discharge lamp.

4. The high pressure discharge lamp lighting device according to claim 1, wherein the lighting state information includes a cumulative lighting time and an electrical characteristic of the high pressure discharge lamp.

5. The high pressure discharge lamp lighting device according to claim 3 or 4, wherein the electrical characteristic is a value of change between an electrical characteristic at the time of mounting the high pressure discharge lamp and a previous electrical characteristic.

6. The high pressure discharge lamp lighting device according to any one of claims 3 to 5, wherein the electrical characteristic is observed between a predetermined cumulative lighting time from mounting of the high pressure discharge lamp.

7. The high pressure discharge lamp lighting device according to any one of claims 3 to 5, wherein the electrical characteristic is observed between a dielectric breakdown of the high pressure discharge lamp and transition to the stable period.

8. The high pressure discharge lamp lighting device according to claim 7, wherein the electrical characteristic is a minimum lamp voltage.

9. The high pressure discharge lamp lighting device according to any one of claims 3 to 5, wherein the electrical characteristic is an effective value of a lamp voltage in the stable period.

10. The high pressure discharge lamp lighting device according to any one of claims 3 to 5, wherein the electrical characteristic is a re-ignition voltage in the stable period.

11. The high pressure discharge lamp lighting device according to any one of claims 1 to 10, wherein the amount of supplied power is a value of a current supplied to the high pressure discharge lamp.

12. The high pressure discharge lamp lighting device according to any one of claims 1 to 10, wherein the amount of supplied power is duration of the electrode heating period.

13. An illumination fixture comprising:

the high pressure discharge lamp lighting device according to any one of claims 1 to 12;
a socket electrically connected to the discharge lamp lighting device and used to connect the high pressure discharge lamp electrically and mechanically; and
a fixture main body for holding the high pressure discharge lamp lighting device and the socket.

14. An illumination system comprising:

a plurality of illumination fixtures according to claim 13; and
a control device for controlling each of the plurality of illumination fixtures.

# Fig. 1

Full bridge circuit 11

Step-down chopper circuit 13

C2

Q1

Q3

E

L1

DL

L2

N1 N2

I_lamp

C1

R1

Q2

Q4

Starting circuit 12

Lamp lightingstate detection part 14

Control circuit 15

Q3~Q6

# Fig. 2

Q3

Q4

Q6

Q5

Phase 1

# Fig. 3

Dielectric breakdown point

Approximately 3 to 4kV

Starting circuit

Lamp current

Phase 1     Phase 2     Phase 3

# Fig. 4

```
        ┌─────────────────┐
        │ Turn on power   │
        │ source          │
        └─────────────────┘
                 │
                 ▼           ╭─ S101
            ◇ Replaced ◇
           ◇ with new lamp? ◇──── Yes ──┐
            ◇           ◇                │
                 │ No                    │
                 │  ╭─ S102              │  ╭─ S104
        ┌─────────────────┐    ┌──────────────────┐
        │ Read cumulative │    │ Reset cumulative │
        │ lighting time X │    │ lighting time X  │
        └─────────────────┘    └──────────────────┘
                 │  ╭─ S103              │
        ┌─────────────────┐              │
        │ Set phase 2 exe-│◄─────────────┘
        │ cution time     │
        └─────────────────┘
                 │
         ┌──────►●
         │       │  ╭─ S105
         │  ┌─────────────────┐
         │  │     Step 1      │
         │  └─────────────────┘
         │       │  ╭─ S106
         │  ┌─────────────────┐
         │  │     Step 2      │
         │  └─────────────────┘
         │       │  ╭─ S107
         │  ┌─────────────────┐
         │  │     Step 3      │
         │  └─────────────────┘
         │       │
         │       ●◄──────────────────┐
         │       │  ╭─ S108          │  ╭─ S109
         │   ◇ Lighting ◇    ┌──────────────────┐
         └── ◇ determined? ◇─┤ Count cumulate   │
          No ◇           ◇   │ lighting time X  │
                 │ Yes       └──────────────────┘
                 └───────────────────┘
```

# Fig. 5

( a )  Phase 2 execution time

$T_{A2\_max}$

$T_{A2\_i}$

Lamp cumulative lighting time

( b )

$T_{A2\_max}$

$T_{A2\_i}$

$T_{A2}$

23

# Fig. 6

(a)

(b)

# Fig. 7

(a)

Lamp rated life (e.g. 12000 hrs)

(b)

# Fig. 8

Lamp dielectric breakdown

|← Phase 1 →|← Phase 2 →|← Phase 3

(a) Lamp current

(b)

EP 2 242 337 A2

# Fig. 9

# Fig. 10

# Fig. 11

# Fig. 12

# Fig. 13

```
                    ┌──┬──────┬──┐
                    │  │      │  │
                    └──┴──────┴──┘
                         │
                         ▼
                      ╱──────╲          S201
                    ╱          ╲      Yes
                   ╱            ╲────────────────┐
                   ╲            ╱                │
                    ╲          ╱                 │
                      ╲──────╱                   │
                         │ No      S202          │
                         ▼                       ▼       S204
                   ┌──────────┐           ┌──────────────┐
                   │          │           │              │
                   └──────────┘           └──────────────┘
                         │         S203            │
                         ▼                         │
              ①    ┌────────────────────┐          │
              ─────│Set lamp current value│◄────────┘
                   │in phase 2           │
                   └────────────────────┘
                         │
            ┌────────────●           S205
            │            ▼
            │      ┌──────────┐
            │      │          │
            │      └──────────┘
            │            │        S206
            │            ▼
            │      ┌──────────┐
            │      │          │
            │      └──────────┘
            │            │        S207
            │            ▼
            │      ┌──────────┐
            │      │          │
            │      └──────────┘
            │            │                      S209
            │            ●◄─────────────┐
            │            ▼              │
            │   No    ╱──────╲  S208    │
            └────────╱        ╲    ┌──────────────┐
                    ╱          ╲   │              │
                    ╲          ╱Yes└──────────────┘
                     ╲        ╱
                      ╲──────╱
```

# Fig. 14

( a ) Phase 2 lamp current value

Lamp cumulative lighting time

X Lamp rated life (e.g. 12000hrs)

( b )

# Fig. 15

( a )

( b )

# Fig.17

# Fig. 18

S301

Yes

No

S302          S304

S303

Set current-time
product in phase 2

S305

S306

S307

S309

S308

No          Yes

# Fig. 19

( a ) Phase 3 current-time
product

ITₐₒ_max

ITₐₑ_ᵢ

ITₐₔ

Lamp cumulative lighting time          X. Lamp rated life (e.g. 12000hrs)

( b )

ITₐₔ_max

ITₐₔ_ᵢ

ITₐₔ

# Fig. 20

```
┌─────┬──────────┬─────┐
│     │          │     │
└─────┴──────────┴─────┘
          │
          ▼
      ◇─────────◇  S401
     ◇           ◇
    ◇   S401      ◇ ──Yes──┐
     ◇           ◇         │
      ◇─────────◇          │
          │                │
          No  S402         │   S404
          │                │
          ▼                ▼
  ┌──────────────┐   ┌──────────────┐
  │Read cumulative│   │Reset cumulative│
  │starting count Y│   │starting count Y│
  └──────────────┘   └──────────────┘
          │  S403           │
          ▼                 │
  ┌──────────────┐          │
  │Set current-time│◄────────┘
  │product in phase 2│
  └──────────────┘
          │
          ▼
          ●◄───────────────┐
          │                │
          ▼   S405         │
  ┌──────────────┐         │
  │              │         │
  └──────────────┘         │
          │   S406         │
          ▼                │
  ┌──────────────┐         │
  │Cumulative starting│     │
  │count Y   Y=Y+1 │       │
  └──────────────┘         │
          │   S407         │
          ▼                │
  ┌──────────────┐         │
  │              │         │
  └──────────────┘         │
          │   S408         │
          ▼                │
  ┌──────────────┐         │
  │              │         │
  └──────────────┘         │
          │                │
          ▼                │
          ●◄───────────┐   │
          │            │   │
          ▼   S409     │   │
   No   ◇─────────◇ Yes│   │
      ◇           ◇    │   │
     ◇             ◇───┘   │
      ◇           ◇        │
       ◇─────────◇─────────┘
```

# Fig. 21

```
                    ┌──┬───────┬──┐
                    │  │       │  │
                    └──┴───┬───┴──┘
                           │
                           ▼
                      ╱─────────╲        ┌─ S501
                    ╱             ╲   Yes
                  ╱                 ╲────────┐
                   ╲               ╱         │
                     ╲           ╱           │
                       ╲───┬───╱             │
                       No  │  ┌─ S502        │      ┌─ S506
                           ▼                 ▼
                    ┌──────────────┐  ┌──────────────┐
                    │Read Vla_i in │  │Reset Vla_i in│
                    │initial       │  │initial       │
                    │lighting      │  │lighting      │
                    └──────┬───────┘  └──────┬───────┘
                           ▼                 │
                    ┌──────────────┐         │
                    │Read Vla in   │─ S503   │
                    │recent        │         │
                    │lighting      │         │
                    └──────┬───────┘         │
                           ▼                 │
                    ┌──────────────┐─ S504   │
                    │              │         │
                    └──────┬───────┘         │
                           │      ┌─ S505    │
                           ▼                 │
                    ┌──────────────┐         │
                    │Set current-  │◄────────┘
                    │time product  │
                    │in phase 2    │
                    └──────┬───────┘
                           ▼
                    ┌──────────────┐─ S507
              ┌────►│    Step 1    │
              │     └──────┬───────┘
              │            ▼
              │     ┌──────────────┐─ S508
              │     │    Step 2    │
              │     └──────┬───────┘
              │            ▼
              │     ┌──────────────┐─ S509
              │     │    Step 3    │
              │     └──────┬───────┘
              │            ▼
              │        ╱───────╲    ┌─ S510
              │   No ╱           ╲                    ┌─ S512
              │◄────               ─────────┐
              │      ╲           ╱          │
              │        ╲───┬───╱     ┌──────────────┐
              │            │ Yes     │Write (or     │
              │            ▼         │update) Vla in│
              │        ╱───────╲     │recent lighting│
              │  No  ╱  1h       ╲   └──────┬───────┘
              └─────  passed after ──────────┘
                    ╲  lighting ? ╱  Yes
                      ╲─────────╱
```

# Fig. 22

Re-ignition voltage $V_p$

# Fig. 23

Lamp voltage

To microcomputer

# Fig. 24

(a) Phase 2 current-time product

Variation amount $\Delta V_{la}$ Lamp rated life (e.g. 12000hrs)

(b)

# Fig. 25

```
                    ┌──────┬──────┐
                    │      │      │
                    └──────┴──────┘
                          │
                          ▼
              ┌─────────────────────┐  S601
              │ Phase 1, Phase 2,   │
              │ Phase 3             │
              └─────────────────────┘
                          │
                          ▼
                    ╱──────────╲        S602
                   ╱   Die-     ╲
                  ╱ electronic   ╲
                  ╲  break-      ╱
                   ╲  down?     ╱
                    ╲──────────╱   No
                          │ Yes   S103
                          ▼
              ┌─────────────────────┐
              │ Detect lamp voltage │
              │ V_Al                │
              └─────────────────────┘
                          │
                          ▼              S604
              ┌─────────────────────┐
              │ Set current-time    │
              │ product in phase 2  │
              └─────────────────────┘
                          │
                          ▼              S605
              ┌─────────────────────┐
              │                     │
              └─────────────────────┘
                          │
                          ▼              S606
              ┌─────────────────────┐
              │                     │
              └─────────────────────┘
                          │
                          ▼
                         ●◄─────
                          │
                          ▼              S607
                    ╱──────────╲   Yes
               No  ╱            ╲
                   ╲            ╱
                    ╲──────────╱
```

# Fig. 26

Dielectric breakdown voltage Vign

Glow discharge Voltage $V_g$

Stable voltage Vla

Minimum voltage $V_{min}$

Lamp voltage (effective value) from starting to stable state

$t$

Dielectric breakdown

# Fig. 27

( a ) Phase 2 current-time product

( b )

# Fig. 28

```
        Turn on
        power source
              |
              ▼        ─ S701
        Read lamp voltage
        V
              |
              ▼        ─ S702
        Set current-time pro-
        duct in phase 2
              |
              ▼        ─ S703
        First, second and
        phase 3s
              |
              ▼        ─ S704
        Detect and write
        lamp voltage V_A
              |
              ▼        ─ S705
    No ◄──    Lighting    ──► Yes
              determined
                 ?
```

## Fig. 29

## Fig. 30

# Fig. 31

```
        ┌──────────────┐
        │ Turn on      │
        │ power source │
        └──────┬───────┘
               │        ~S801
        ◇──────────────◇
       ╱ Replaced      ╲         ┌─────────────────────┐  ~S808      ┌──────────────────┐  ~S809
      ╱ with new lamp   ╲──Yes──→│ Reset cumulative    │        ●───→│ Set current-time │
      ╲       ?         ╱        │ lighting time X,    │            │ product          │
       ╲──────────────╱         │ electrical charac-  │            │ in phase 2       │
               │ No   ~S802      │ teristics VA and VIa│            └────────┬─────────┘
        ┌──────────────┐         └─────────────────────┘                     │
        │ Read cumulative│                                                    │  ~S810
        │ lighting time X,│                                         ┌─────────────────────┐
        │ charactersistcs │                                         │ First, second and   │
        │ VA und VIa      │                                         │ phase 3s            │
        └──────┬───────┘                                            └─────────┬───────────┘
               │  ~S803                                                       │  ~S811
        ◇──────────────◇                                            ┌─────────────────────┐
       ╱   X<100h?      ╲─────Yes─────────────────────────┐         │ Detect and write    │
       ╲──────────────╱                                   │         │ lamp voltage VA     │
               │ No   ~S804                                │         └─────────┬───────────┘
        ┌──────────────┐                                   │                   │  ~S812
        │ Set current-time│                                │          ◇─────────────────◇
        │ product in      │                                │         ╱    Lighting       ╲──No──┐
        │ phase 2         │                                │         ╲   determined ?    ╱      │
        └──────┬───────┘                                   │          ◇────────┬────────◇      │
               │  ~S805                                    │                   │ Yes  ~S813     │
        ┌──────────────┐                                   │         ┌─────────────────────┐   │   ~S815
        │ First, second  │                                 │         │ Count cumulative    │   │  ┌──────────────────┐
        │ and phase 3s   │                                 │         │ lighting time X     │   │  │ Detect VIa in     │
        └──────┬───────┘                                   │         └─────────┬───────────┘   │  │ stable state      │
               │  ~S807                                    │                   │  ~S814         │  └────────┬─────────┘
        ◇──────────────◇  ┌──────────────────┐             │          ◇─────────────────◇       │           │
       ╱   Lighting      ╲│ Count cumulative │  ~S806      │         ╱   1h passed after ╲─Yes──┘           │
       ╲  determined ?   ╱│ lighting time X  │             │         ╲   lighting ?      ╱                  │
        ◇──────┬────────◇ └──────────────────┘             │          ◇────────┬────────◇                  │
         No    │ Yes                                        │              No   │                           │
               └───────────────────────────────────────────┘                   └───────────────────────────┘
```

# Fig. 32

Phase 2 current-
time product

Lamp voltage Vmin

# Fig. 33

Lamp voltage

( a )

**Vmin**

Vmin0_B

VminO_A

Lamp: B

Vmin100_B

Vmin100_A

0    Cumulative lighting time X    100h

Phase 2 current-time product

( b )

**ITA2**

ITA2_max

Gradient k_B

Lamp: B

ITA2i_B

ITA2i_A

0  100h

Cumulative lighting time X    Lamp rated life (e.g. 12000h)

# Fig. 34

( a )

( b )

( c )

# Fig. 35

(a)

Lamp current waveform

←GND

1. 0A/div

Phase 1, Phase 2,
Phase 3

(b)

←GND

1. 0A/div

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005507553 PCT